(19) Europäisches Patentamt
European Patent Office
Office européen des brevets

(11) **EP 2 414 886 B1**

(12) **EUROPÄISCHE PATENTSCHRIFT**

(45) Veröffentlichungstag und Bekanntmachung des Hinweises auf die Patenterteilung:
**23.03.2022  Patentblatt 2022/12**

(21) Anmeldenummer: **10713176.5**

(22) Anmeldetag: **01.04.2010**

(51) Internationale Patentklassifikation (IPC):
**G02B 27/09** *(2006.01)*    **G02B 3/00** *(2006.01)*

(52) Gemeinsame Patentklassifikation (CPC):
**G02B 3/0043; G02B 3/0056; G02B 27/0961**

(86) Internationale Anmeldenummer:
**PCT/EP2010/054446**

(87) Internationale Veröffentlichungsnummer:
**WO 2010/112596 (07.10.2010 Gazette 2010/40)**

(54) **BELEUCHTUNGSVORRICHTUNG MIT STRAHLFORMER**

ILLUMINATON DEVICE WITH BEAM SHAPER

MODULE D'ECLAIRAGE AVEC DISPOSITIF DE MISE EN FORME D'UN FAISCEAU

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **03.04.2009  DE 102009016234**

(43) Veröffentlichungstag der Anmeldung:
**08.02.2012  Patentblatt 2012/06**

(73) Patentinhaber: **Fraunhofer-Gesellschaft zur Förderung der angewandten Forschung e.V.
80686 München (DE)**

(72) Erfinder:
• **MICHAELIS, Dirk**
  **07747 Jena (DE)**
• **WÄCHTER, Christoph**
  **07743 Jena (DE)**
• **DANZ, Norbert**
  **07743 Jena (DE)**
• **KUDAEV, Sergey**
  **85055 Ingolstadt (DE)**
• **FLÄMMICH, Michael**
  **07745 Jena (DE)**

(74) Vertreter: **Hersina, Günter et al
Schoppe, Zimmermann, Stöckeler
Zinkler, Schenk & Partner mbB
Patentanwälte
Radlkoferstrasse 2
81373 München (DE)**

(56) Entgegenhaltungen:
EP-A1- 1 041 405        WO-A2-99/36830
WO-A2-02/077672      US-A- 5 439 621
US-A- 5 610 390        US-A1- 2006 291 065
US-A1- 2007 002 453

EP 2 414 886 B1

## Beschreibung

Ausführungsbeispiele der vorliegenden Erfindung beziehen sich auf Strahlformer, die beispielsweise im Bereich von Beleuchtungen und projektiven Anzeigen zum Einsatz kommen.

Bei vielen technischen Anwendungen werden heute kompakte Beleuchtungseinrichtungen eingesetzt, die beispielsweise Teil einer projektiven Anzeige oder eines projektiven Anzeigenelements sind. Als Projektionsflächen können hierbei dem entsprechenden Gerät zugehörige Projektionsflächen, etwa eine diffus streuende Projektionsscheibe, oder auch externe Projektionsflächen verwendet werden, also beispielsweise eine (diffus) streuende Wand eines Raums. Ebenso werden bei vielen weiteren technischen Anwendungen entsprechende Beleuchtungen eingesetzt.

Bei vielen dieser Anwendungen werden durch Ansteuerung einzelner oder mehrerer Lichtquellen bei verschiedenen Implementierungen Lichtstrahlen erzeugt, die dann mittels eines Kollimators parallelisiert werden. Durch gezielte Ansteuerung entsprechender Lichtquellen können dann beispielsweise unterschiedliche Informationen auf der entsprechenden Projektionsfläche wiedergegeben werden.

Es wurden dabei in vielen Fällen Kollimationsoptiken, also Optiken zur Parallelisierung von Strahlen, von beispielsweise flächenhaften Lichtquellen auf Basis von Pyramidenarrays oder Linsenarrays verwendet, um ein gerichtetes Strahlprofil zu erhalten. Hierbei steht die Kollimationseigenschaft, also die Parallelisierung der Strahlen, die von der oder den Lichtquellen emittiert werden, im Vordergrund.

Die US 2007/0002452 A1 beschreibt so beispielsweise eine Kollimationsmikrolinsen-Anordnung zur Verwendung mit einer Hintergrundbeleuchtungsanzeige, die ein Substrat und eine Mehrzahl von Mikrolinsen an einer Ausgabeseite des Substrats aufweist. Eine spiegelnd reflektierende Schicht auf der den Mikrolinsen entgegengesetzten Seite des Substrats und eine Mehrzahl von Blenden in der reflektierenden Schicht mit direkter Übereinstimmung zu den Mikrolinsen der Linsenanordnung sind ferner in der Anordnung enthalten. Die US 2007/0002452 A1 beschreibt ferner ein Herstellungsverfahren, bei dem die Blenden selbst ausgerichtet zu den Mikrolinsen erzeugt werden, indem Laserlicht die Ausgabeseite der Anordnung beleuchtet, so dass Laserlicht durch die kleinen Linsen der Linsenanordnung auf die Schicht der Blende fokussiert werden. Hierdurch werden Löcher oder Blenden in die betreffende Schicht ablatiert.

Die US 2007/0002452 beschreibt somit eine Kollimations-Mikrolinsenanordnung und ein Verfahren zu ihrer Herstellung, bei dem gerade durch das beschriebene Herstellungsverfahren ein möglichst gleichmäßiges Abstrahlprofil erzeugt wird, wie es für Kollimationsoptiken wünschenswert ist. Allerdings ermöglichen entsprechende Kollimations-Mikrolinsenanordnungen kaum eine Erzeugung komplexerer Abstrahlprofile.

Die US 2006/0291065 A1 betrifft ein Verfahren zum Herstellen einer optischen Schicht, die mit einer Mehrzahl von Mikrolinsen auf einer Oberfläche einer Basisschicht versehen ist. Dabei wird zunächst eine Mehrzahl von halb kugelförmigen Mikrolinsen aus flüssigen Materialien auf der Oberfläche der Basisschicht aufgebracht. Daraufhin wird die Basisschicht in eine vorbestimmte Ausrichtung gebracht, in der die Erdbeschleunigung auf die aufgebrachten halbkugelförmigen Mikrolinsen aus flüssigen Materialien einwirkt, um diese von der Basisschicht weg zu bewegen, woraufhin die aufgebrachten halbkugelförmigen Mikrolinsen aus den flüssigen Materialien ausgehärtet werden. Ausgehend von diesem Stand der Technik besteht daher die Aufgabe der vorliegenden Erfindung darin, einen Strahlformer für eine Lichtquellenanordnung zu schaffen, der eine kompaktere Realisierung und eine Erzeugung einer komplexeren Abstrahlcharakteristik ermöglicht.

Diese Aufgabe wird durch eine Beleuchtungsvorrichtung gemäß den Ansprüchen 1 und 21 gelöst.

Ein Strahlformer für eine Lichtquellenanordnung zur Erzeugung eines Abstrahlprofils gemäß einem Ausführungsbeispiel der vorliegenden Erfindung umfasst eine Vielzahl von benachbart angeordneten optischen Strahlformungselementen unterschiedlicher Typen, wobei die Strahlformungselemente jeweils einem Typ einer Mehrzahl unterschiedlicher Typen mit unterschiedlichen optischen Eigenschaften angehören, wobei die Strahlformungselemente bei gemeinsamer Beleuchtung das Abstrahlprofil des Strahlformers bewirken und wobei die Strahlformungselemente jeweils ein intensitätsmodulierendes Element und ein refraktives Element aufweisen.

Ausführungsbeispielen der vorliegenden Erfindung liegt die Erkenntnis zugrunde, dass eine kompaktere Realisierung eines komplexeren Abstrahlprofils dadurch erzielbar ist, dass ein Strahlformer eine Vielzahl von optischen Strahlformungselementen aufweist, die jeweils einem Typ einer Mehrzahl unterschiedlicher Typen angehören, wobei die einzelnen Typen unterschiedliche optische Eigenschaften aufweisen. Die unterschiedlichen optischen Eigenschaften bewirken dann im Zusammenspiel, bei einer entsprechenden gemeinsamen Beleuchtung, das zu erzielende Abstrahlprofil. Hierbei können bei Ausführungsbeispielen der vorliegenden Erfindung die einzelnen Typen der Strahlformungselemente sich hinsichtlich einer Vielzahl verschiedener Merkmale unterscheiden. Hierzu gehören beispielsweise eine Form oder Größe des Strahlformungselements, eine Höhe oder ein Abstand des intensitätsmodulierenden Elements von dem refraktiven Element, eine Form oder eine Größe einer intensitätsmodulierenden Struktur, einer Lage der intensitätsmodulierenden Struktur des intensitätsmodulierenden Elements bezüglich einer Lage des refraktiven Elements, eine Ausgestaltung eines Randbereichs zwischen zwei benachbarten Strahlformungselementen und eine Form und eine Größe des refraktiven Elements.

Die einzelnen Strahlformungselemente können hierbei wenigstens teilweise ein- oder zweidimensional unregelmäßig über einem Substrat angeordnet sein. Darüber hinaus können die Strahlformungselemente direkt aneinander angrenzend ausgeführt sein, um beispielsweise eine möglichst effiziente Ausnutzung des zur Verfügung stehenden Bauraums zu ermöglichen.

Die intensitätsmodulierenden Elemente können hierbei eine absorbierende oder eine reflektierende Schicht oder ein absorbierendes oder reflektierendes Schichtsystem, das optional strukturiert sein kann, aufweisen. Bei Ausführungsbeispielen, die beide Schichten umfassen, kann die absorbierende Schicht dem refraktiven Element zugewandt und die reflektierende Schicht dem refraktiven Element abgewandt sein, um ein "Recycling" von Licht bei einer Reduzierung von Störlicht zu ermöglichen.

Bei Ausführungsbeispielen der vorliegenden Erfindung kann darüber hinaus das refraktive Element ferner jeweils eine dem intensitätsmodulierenden Element zugewandte Abstandsschicht aufweisen, um eine freiere Einstellung des Abstandes zwischen dem refraktiven Element und dem intensitätsmodulierendem Element zu ermöglichen.

Darüber hinaus kann bei Ausführungsbeispielen der vorliegenden Erfindung ggf. eine Qualität des Abstrahlprofils dadurch verbesserbar sein, dass zur Reduzierung von Streulicht unmittelbar benachbarte Strahlformungselemente durch eine Trennstruktur voneinander getrennt sind, die beispielsweise einen Graben oder eine Trennschicht umfassen. Eine solche Trennschicht kann reflektierend oder absorbierend ausgeführt sein. Je nach verwendeter Trennstruktur und verwendetem Material für eine solche Trennschicht ist daher beispielsweise über Totalreflexion, Reflexion oder Absorption ein ggf. teilweises "Recyceln" von Streulicht innerhalb der Strahlformungselemente möglich. Ebenso kann beispielsweise durch eine absorbierende Trennschicht das Eindringen von Fremdlicht von Seitenwänden ggf. reduziert oder unterbunden werden.

Strahlformer, gemäß Ausführungsbeispielen der vorliegenden Erfindung können hierbei beispielsweise derart auf Basis eines gemeinsamen Substrats geformt sein, dass die Strahlformungselemente wenigstens Teile eines gemeinsamen Substrats des Strahlformers umfassen.

Zur Erzeugung des Abstrahlprofils können die Strahlformer gemäß Ausführungsbeispielen der vorliegenden Erfindung beispielsweise derart ausgeführt sein, dass wenigstens ein Teil der Vielzahl von optischen Strahlformungselementen derart ausgebildet ist, dass verschiedene Strahlen, die auf verschiedenen Strahlformungselemente basieren, sich in einem gemeinsamen Punkt in einem vorbestimmten Abstand von dem Strahlformer schneiden. Hierbei können die unterschiedlichen optischen Eigenschaften wenigstens eines Teil der Mehrzahl von Typen von Strahlformungselementen entsprechend durch einen stetigen funktionalen Zusammenhang beschreibbar sein, in den eine Information bezüglich eines Ortes des betreffenden Strahlformungselements eingeht. Die betreffende Information kann beispielsweise auf einen Referenzpunkt oder ein Referenzstrahlformungselement bezogen sein.

Strahlformer gemäß Ausführungsbeispielen der vorliegenden Erfindung können darüber hinaus eine Lichtquelle aufweisen, die auf einer den refraktiven Elementen abgewandten Seite der intensitätsmodulierenden Elemente angeordnet ist. Hierbei kann zwischen dem Strahlformer und der Lichtquelle ein Luftspalt oder ein brechungsindexangepasstes Kontaktmaterial (z.B ein Klebstoff) umfasst sein. Eine entsprechende Lichtquelle kann eine oder mehrere organische oder auch anorganische Leuchtdiode(n) umfassen.

Im Folgenden werden Ausführungsbeispiele der vorliegenden Erfindung unter Bezugnahme auf die beiliegenden Zeichnungen näher beschrieben und erläutert.

Fig. 1        zeigt eine schematische Querschnittsdarstellung durch einen Strahlformer gemäß einem Ausführungsbeispiel der vorliegenden Erfindung;

Fig. 2        zeigt eine schematische Querschnittsdarstellung durch einen weiteren Strahlformer gemäß einem Ausführungsbeispiel der vorliegenden Erfindung;

Fig. 3        zeigt eine Querschnittsdarstellung eines weiteren Strahlformers gemäß einem Ausführungsbeispiel der vorliegenden Erfindung;

Fig. 4        zeigt anhand einer Strahleinheit mit einem Strahlformer gemäß einem Ausführungsbeispiel der vorliegenden Erfindung eine Prinzipskizze zur Erzeugung einer komplexen Abstrahlcharakteristik auf Basis einer Flächenlichtquelle mit optionaler Auskoppelstruktur;

Fig. 5        zeigt anhand einer weiteren Strahleinheit mit einem Strahlformer gemäß einem Ausführungsbeispiel der vorliegenden Erfindung eine Prinzipskizze zur Erzeugung einer komplexeren Abstrahlcharakteristik (optional in einer reflektierenden Hausung);

Fig. 6a bis 6l        zeigen verschiedene Ausführungsformen von Strahlformungselementen für Strahlformer gemäß Ausführungsbeispielen der vorliegenden Erfindung.

Fig. 7a und 7b    zeigen vereinfachte Ausschnitte aus einem Strahlformer gemäß einem Ausführungsbeispiel der vorliegenden Erfindung mit hexagonalen Kanalgeometrien;

Fig. 8a bis 8f    illustrieren verschiedene Anordnungsmöglichkeiten von Strahlformungselementen gemäß Ausführungsbeispielen der vorliegenden Erfindung;

Fig. 9a    illustriert schematisch das Aufbringen eines Strahlformers gemäß einem Ausführungsbeispiel der vorliegenden Erfindung auf eine Flächenlichtquelle mit einem Luftspalt zwischen Lichtquelle und Strahlformer;

Fig. 9b    illustriert schematisch das Aufbringen eines Strahlformers gemäß einem Ausführungsbeispiel der vorliegenden Erfindung auf eine Flächenlichtquelle mit einem brechungsindexangepassten Kontaktmaterial (z.B. Klebstoff) zwischen Lichtquelle und Strahlformer;

Fig. 10a    zeigt das in Fig. 4 gezeigte Ausführungsbeispiel mit einer zusätzlichen Randverspiegelung;

Fig. 10b    zeigt schematisch das in Fig. 9a gezeigte Ausführungsbeispiel mit einer Randverspiegelung;

Fig. 10c    zeigt schematisch das in Fig. 9b gezeigte Ausführungsbeispiel mit einer Randverspiegelung;

Fig. 11    ein Ausführungsbeispiel eines Strahlformers mit einer Lichtquelle gemäß einem Ausführungsbeispiel der vorliegenden Erfindung mit einer zusätzlichen Transformationsoptik;

Fig. 12    zeigt schematisch zwei Strahlformungselemente gemäß einem Ausführungsbeispiel der vorliegenden Erfindung;

Fig. 13    zeigt schematisch einen Strahlformer gemäß einem Ausführungsbeispiel der vorliegenden Erfindung, bei dem näherungsweise die Strahlformungselemente ein Fourierbild (Fernbild) bzw. Abbild (Bildebene) der Blendenöffnung erzeugen;

Fig. 14a und Fig. 14b    illustrieren unterschiedliche Lichtverteilungen durch Fourier-Abbildungen einer kreisförmigen-Blendenstruktur für unterschiedliche Blenden-Linsen-Abstände;

Fig. 15a und Fig. 15b    illustrieren kombinierte Lichtablenkung und Strahlformung durch Versatz der Blendenöffnung zur optischen Achse von Linsen mit Linsen-Blenden-Zentrierung (a) und Linsen-Blenden-Versatz (b) gemäß Ausführungsbeispielen der vorliegenden Erfindung;

Fig. 16    illustriert eine Überlagerung verschiedener Strahlen von verschiedenen Strahlformungselementen durch eine gezielte Variation der Lage der Blendenöffnung bei verschiedenen Strahlformungselementen gemäß einem Ausführungsbeispiel der vorliegenden Erfindung.

Fig. 17    illustriert eine kompliziertere Bildgebung mit Hilfe verschiedener Blenden der intensitätsmodulierenden Elemente, bei denen Strahlen verschiedener Strahlformungselemente an wenigstens einem Punkt sich schneiden;

Fig. 18    illustriert eine Bildgebung eines Strahlformers gemäß einem Ausführungsbeispiel der vorliegenden Erfindung zur Generation von Schriftzügen im Fernfeld oder einer Bild- oder Beleuchtungsebene; und

Fig. 19    illustriert die Wirkungsweise eines Strahlformungselements mit einem refraktiven Freiform-Element.

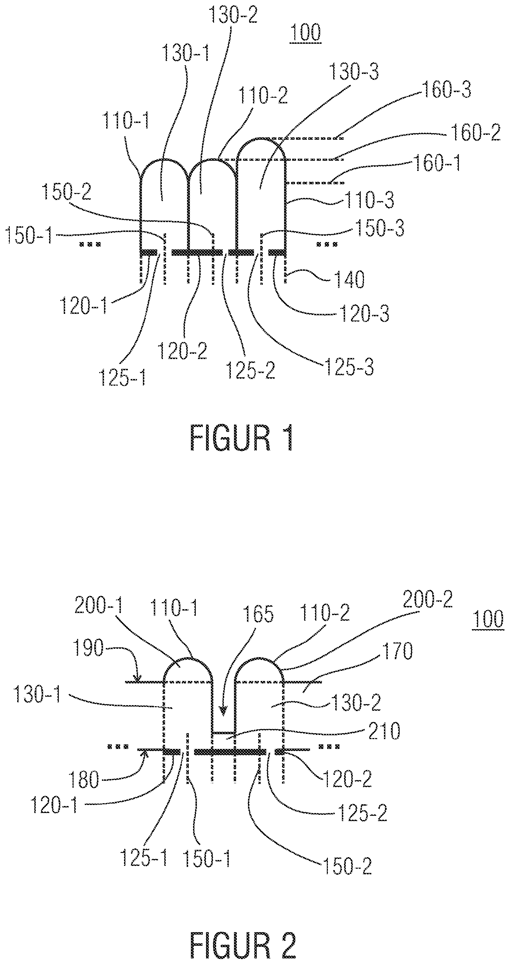

Mit Bezugnahme auf die Fig. 1 bis 19 werden im Folgenden Ausführungsbeispiele der folgenden Erfindung in Form eines Strahlformers für eine Lichtquellenanordnung zur Erzeugung eines Abstrahlprofils beschrieben. Bevor im weiteren Verlauf der Beschreibung näher auf die grundsätzliche Funktionsweise sowie Ausgestaltungen von Strahlformern gemäß Ausführungsbeispielen der vorliegenden Erfindung eingegangen wird, werden zunächst im Zusammenhang mit den Fig. 1 bis 3 grundlegende unterschiedliche Ausgestaltungen von Strahlformern beschrieben.

Fig. 1 zeigt einen Strahlformer 100 für eine Lichtquellenanordnung, die in Fig. 1 selber nicht dargestellt ist, zur Erzeugung eines Abstrahlprofils. Der Strahlformer 100 umfasst hierbei eine Vielzahl von benachbart angeordneten optischen Strahlformungselementen 110, von denen in Fig. 1 drei im Querschnitt gezeigt sind. Die drei in Fig. 1 gezeigten Strahlformungselemente 110-1, 110-2, 110-3 gehören hierbei drei unterschiedlichen Typen mit unterschiedlichen optischen Eigenschaften an. Diese werden, wie im Folgenden noch ausgeführt wird, durch die strukturellen Merkmale der einzelnen Strahlformungselemente bestimmt.

Jedes der Strahlformungselemente 110 umfasst ein intensitätsmodulierendes Element 120 und ein refraktives Element 130 auf, das auch als lichtbrechendes Element bezeichnet wird.

Die intensitätsmodulierenden Elemente 120, von denen in Fig. 1 entsprechend ebenfalls drei mit den Bezugszeichen 120-1, 120-2 und 120-3 gezeigt sind, handelt es sich um Elemente, die jeweils eine intensitätsmodulierende Struktur 125 umfassen, die zu einer räumlichen Veränderung der Intensität eines auf die intensitätsmodulierenden Elemente 120 einfallenden Strahls führt. Hierbei kann es sich beispielsweise um Blenden handeln, bei denen die entsprechende intensitätsmodulierende Struktur 125 eine oder mehrere Blendenöffnungen umfasst. Diese können sich beispielsweise im Hinblick auf Größe, Form und Lage unterschieden. Darüber hinaus können intensitätsmodulierende Elemente 120 alternativ oder ergänzend ebenfalls Graustufenfilter umfassen, die die Intensität des einfallenden Strahls in Abhängigkeit von der räumlichen Koordinate unterschiedlich stark abschwächen.

Ein Abschwächungskoeffizient im Sinne eines Verhältnisses einer hinter dem intensitätsmodulierenden Elements abgestrahlten Leistung im Verhältnis zu einer vor dem intensitätsmodulierenden Elements eingestrahlten Leistung kann so grundsätzlich beliebige Werte zwischen 0 und typischerweise 1 annehmen. Grundsätzlich besteht darüber hinaus die Möglichkeit, durch den Einsatz von Interferenz-Strukturen auf Basis von Interferenzeffekten ggf. auch spektral Intensitätsmodulationen zu erhalten, die eine entsprechende Filterwirkung umsetzen.

Anders ausgedrückt, kann es sich bei intensitätsmodulierenden Elementen und ihren intensitätsmodulierenden Strukturen beispielsweise um Blenden handeln, die idealerweise eingehende Strahlung entweder vollständig absorbieren oder vollständig transmittieren. Intensitätsmodulierenden Elementen können ferner auch Graustufenfilter, bei denen auch gezielte Abschwächungen auftreten können, oder Interferenz-Strukturen aufweisen. Der Einfachheit halber werden jedoch im Folgenden im Wesentlichen Blenden als intensitätsmodulierende Elemente und entsprechende Blendenöffnungen als intensitätsmodulierende Strukturen beschrieben. Dies ist jedoch in keinster Weise einschränkend zu verstehen, da die im weiteren Verlauf beschriebenen Ausführungsbeispiele durch eine entsprechende Modifikation der intensitätsmodulierenden Elemente leicht veränderbar sind.

Ausgehend von einem Substrat, das für die beabsichtigte Strahlung idealer Weise eine ausreichende Transparenz aufweist, können so entsprechende intensitätsmodulierende Elemente beispielsweise mittels lithographischer Verfahren, gezielter Bedampfungstechniken (z.B. Schattenbedampfung) oder anderer Dünnschicht-Techniken präpariert werden. Gleiches gilt ebenfalls für entsprechende Graustufenfilter, bei denen beispielsweise ein entsprechender Intensitätsverlauf durch eine Verbindung einer Bedampfungstechnik mit zumindest teilweisem isotropem Depositionsverhalten (z.B. Sputtern bzw. Kathodenzerstäubung) und einer Schattenbedampfung realisiert werden kann.

Die refraktiven Elemente 130, von denen in Fig. 1 zu jedem Strahlformungselement 110 eines mit dem Bezugszeichen 130-1, 130-2 und 130-3 gezeigt ist, können beispielsweise als Linsen oder andere lichtbrechende oder eine entsprechende Strahlung brechende Elemente ausgeführt sein. Neben sphärischen Linsen oder Halbkugellinsen (typischerweise plan-konvexe Linsen), die beispielsweise auf einem entsprechenden transparenten Substrat, das in Fig. 1 nicht gezeigt ist, aufgebracht sind, können entsprechend auch asphärische, elliptische, zylindrische oder andere Linsen bzw. Freiform-Elemente implementiert werden. Liegt dem Strahlformer ein gemeinsames Substrat zu Grunde, welches in dem entsprechenden Spektralbereich der Strahlung transparent ist, können entsprechende Linsen oder Freiform-Elemente, beispielsweise auf Basis von Polymeren, hergestellt werden.

Obwohl grundsätzlich eine direkte Herstellung der refraktiven Elemente oder Teile derselben mittels lithographischer Verfahren möglich ist, wird häufig ein zweistufiges Herstellungsverfahren angewendet. Im Rahmen eines ersten Schritts, dem sogenannten Mastering, werden hierbei sogenannte Masterstrukturen präpariert, auf Basis derer dann mittels Replikationstechniken die eigentlichen Strukturen der Strahlformer hergestellt werden.

Je nach Umsetzung des Masterings können hierbei die Masterstrukturen als Negativ der späteren Struktur direkt präpariert werden, oder aber über ein zunächst präpariertes Muster (Positiv) erzeugt werden.

Mit Hilfe des sogenannten Reflow-Verfahrens, bei dem vorstrukturierte Polymer-Strukturen einer Lösungsmittelatmosphäre oder einer Temperatur im Bereich der Glastemperatur des Polymers ausgesetzt wird, kann so beispielsweise ein Positiv der späteren Struktur der refraktiven Elemente erzeugt werden. Dieses kann dann mit Hilfe galvanischer Verfahren unter Verwendung von Aluminium oder anderer Metalle in die Masterstruktur verwandelt werden.

Während Verfahren auf Basis des Reflow-Verfahrens eher geeignet sind, sphärische oder leicht asphärische Linsen mit verschiedensten Grundflächen zu präparieren, können mit Hilfe der Ultra-Präzisionsvearbeitung beliebige Formen, also auch optische Freiform-Elemente, geschaffen werden. Optische Freiform-Elemente weisen hierbei im Allgemeinen keine oder nur eine sehr beschränkte Symmetrie im Sinne einer Spiegel- oder Rotationssymmetrie auf und unterscheiden sich daher von Linsen, die häufig deutliche erkennbare Symmetrieeigenschaften aufweisen.

Im Rahmen der Replikation können dann auf Basis der Masterstrukturen mit Hilfe von UV-Abformungstechniken, Heissprägen, Spritzgießen, einem direkten Prägen in Glas oder einem Polymer oder einer anderen Replikationstechnik die eigentlichen Strukturen des Strahlformers präpariert werden.

Die Strahlformungselemente 110, die auch als Kanäle bezeichnet werden, weisen unterschiedliche optische Eigenschaften auf, weshalb sie als zu unterschiedlichen Typen gehörend einzustufen sind. Um dies näher zu illustrieren, sind für die drei intensitätsmodulierenden Elemente 120-1, 120-2, 120-3 jeweils als gepunktete Linien Randmarkierungen 140 und Mittelpunktsmarkierungen 150 eingezeichnet. Um die Klarheit von Fig. 1 nicht zu beeinträchtigen, ist lediglich eine der Randmarkierungen 140 mit einem entsprechenden Bezugszeichen in Fig. 1 markiert.

Die Typen der beiden Strahlformungselemente 110-1 und 110-2 unterscheiden sich bei dem in Fig. 1 gezeigten Ausführungsbeispiel hinsichtlich der Lage und der Größe der intensitätsmodulierenden Strukturen der intensitätsmodulierenden Elemente 120, also beispielsweise der Blendenöffnungen. So verläuft bei dem Strahlformungselement 110-1 die Mittelpunktsmarkierung 150-1 zentral durch die intensitätsmodulierende Struktur 125-1. Im Unterschied hierzu verläuft die Mittelpunktsmarke 150-2 nicht durch die Intensitätsmodulationsstruktur 125-2 des Intensitätsmodulationselements 120-2. Die Typen der beiden Strahlformungselemente 110-1, 110-2 unterscheiden sich daher bei dem in Fig. 1 gezeigten Fall durch unterschiedliche Lagen der intensitätsmodulierenden Strukturen 125 bezüglich einer Lage des refraktiven Elements 130. Im Hinblick auf die refraktiven Elemente 130-1, 130-2 unterscheiden sich die beiden Strahlformungselemente 110-1, 110-2 jedoch nicht.

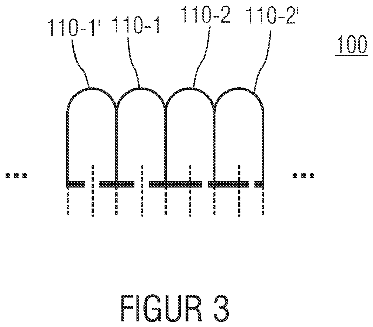

Während das intensitätsmodulierende Element 120-3 des dritten Strahlformungselements 110-3 zwar dem des ersten Strahlformungselements 110-1 entspricht, unterscheidet sich jedoch das refraktive Element 130-3 von denen der beiden ersten beiden Strahlformungselemente 110-1, 110-2. Um dies näher zu illustrieren, sind in Fig. 1 ferner drei Höhenlinien 160-1, 160-2, 160-3 eingezeichnet. Die Höhenlinie 160-1 illustriert hierbei einen Beginn einer Rundung des refraktiven Elements 130-3, der für alle drei refraktiven Elemente der drei in Fig. 3 gezeigten Strahlformungselemente 110 gleich ist. Im Falle einer Realisierung auf Basis eines gemeinsamen Substrats kann die Höhenlinie 160-1 beispielsweise eine Lage einer Hauptoberfläche des Substrats bezeichnen.

Die Höhenlinie 160-2 illustriert ein Niveau eines höchsten Punktes der refraktiven Elemente 130-1, 130-2 der beiden Srahlformungselemente 110-1, 110-2. Entsprechend kennzeichnet die oberhalb der Höhenlinie 160-2 gezeigte Höhenlinie 160-3 einen entsprechenden Punkt des refraktiven Elements 130-3 des dritten Strahlformungselements 110-3.

Mit anderen Worten unterscheidet sich der Typ des Strahlformungselements 110-3 von dem des Strahlformungselements 110-1 hinsichtlich einer Form bzw. Ausgestaltung des refraktiven Elements 130. Im Vergleich der Typen der Strahlformungselemente 110-2 und 110-3 unterscheiden diese sich nicht nur im Hinblick auf die Ausgestaltung des refraktiven Elements 130, sondern ebenfalls hinsichtlich der Ausgestaltung des intensitätsmodulierenden Elements 120, wie oben bereits ausgeführt wurde.

Gerade der Vergleich der beiden Strahlformungselemente 110-2, 110-3 zeigt somit, dass sich Typen mit unterschiedlichen optischen Eigenschaften hinsichtlich mehrerer Merkmale unterscheiden können. Wie bereits zuvor angedeutet wurde, zählen hierzu Form und Größe des Strahlformungselements 110, ein Abstands des intensitätsmodulierenden Elements 120 von dem refraktiven Element 130, einer Form oder einer Größe der intensitätsmodulierenden Struktur 125 des jeweiligen intensitätsmodulierenden Elements 120, eine Lage der intensitätsmodulierenden Struktur 125 bezüglich einer Lage des refraktiven Elements 130, eine Ausgestaltung eines Randbereichs zwischen zwei benachbarten Strahlformungselementen 110 und einer Form und Größe des refraktiven Elements.

Bevor im Zusammenhang mit den Fig. 2 bis 19 weitere Ausführungsbeispiele der vorliegenden Erfindung beschrieben und hinsichtlich ihrer Funktionsweise erläutert werden, bietet es sich an, an dieser Stelle darauf hinzuweisen, dass im Folgenden für Elemente, Objekte und Strukturen mit ähnlicher oder gleicher Struktur oder ähnlichen oder gleichen funktionellen Eigenschaften gleiche oder ähnliche Bezugszeichen verwendet werden. Entsprechend können Elemente, Strukturen und Objekte, die mit gleichen oder ähnlichen Bezugszeichen bezeichnet sind, in unterschiedlichen Ausführungsbeispielen der vorliegenden Erfindung identisch oder unterschiedlich hinsichtlich ihrer genauen Implementierungsdetails ausgeführt sein. Dies bezieht sich sowohl auf Materialwahlen, Dimensionierungen oder auch andere Parameter.

Anders ausgedrückt können bei unterschiedlichen Ausführungsbeispielen der vorliegenden Erfindung mit dem gleichen oder einem ähnlichen Bezugszeichen bezeichnete Objekte identisch, ähnlich oder hinsichtlich zumindest eines Teils der entsprechenden Parameter unterschiedlich implementiert sein. Dies ermöglicht es, die Beschreibung knapper und kurzer zu fassen und so unnötige Wiederholungen einzusparen.

Darüber hinaus werden im Rahmen der vorliegenden Beschreibung zusammenfassende Bezugszeichen für Objekte, Elemente und Strukturen verwendet, die mehrfach im Rahmen eines Ausführungsbeispiels oder mehrfach bei verschiedenen Ausführungsbeispielen auftreten. Mit dem zusammenfassenden Bezugszeichen werden, sofern sich nicht aus dem Zusammenhang oder durch eine explizite Angabe etwas anderes ergibt, die betreffende Struktur, das betreffende Objekt oder das betreffende Element an sich bezeichnet, während bei einer Beschreibung oder einer Erörterung eines Merkmals eines speziellen Elements, Objekts oder einer bestimmten Struktur das betreffende objektbezogene Bezugszeichen verwendet wird.

Fig. 2 zeigt einen Strahlformer 100 gemäß einem weiteren Ausführungsbeispiel der vorliegenden Erfindung, das sich im Wesentlichen von dem in Fig. 1 gezeigten Ausführungsbeispiel dadurch unterscheidet, dass das dritte Strahlformungselement 110-3 nicht gezeigt ist und zwischen dem ersten und dem zweiten Strahlformungselement 110-1, 110-2 eine Trennstruktur 165 integriert ist. Genauer gesagt, handelt es sich bei der Trennstruktur 165 um einen Graben, der zwischen die beiden Strahlformungselemente 110 eingebracht ist.

Der in Fig. 2 gezeigte Strahlformer 100 basiert auf einem Substrat 170, bei dem es sich beispielsweise um ein Glassubstrat oder um ein anderes, für die entsprechende Strahlung transparentes Substrat handeln kann. Neben Glassubstraten können so beispielsweise auch im Falle optischer Strahlen, also für Wellenlängen im optisch sichtbaren Bereich, elektrisch isolierende monokristalline oder polykristalline Substrate, Folien oder Polymerschichten verwendet werden, die häufig eine entsprechende Transparenz in diesem Spektralbereich aufweisen.

Während auf eine Rückseite 180 des Substrats 170 die intensitätsmodulierenden Elemente 120 beispielsweise mittels Dünnschichttechniken aufgebracht und strukturiert werden, ist auf eine Vorderseite 190 des Substrats zu jedem Kanal bzw. zu jedem Strahlformungselement 110 eine Linse 200-1, 200-2 aufgebracht worden. Diese können beispielsweise mit Hilfe des eingangs beschriebenen Mastering- und Replikationstechniken hergestellt werden.

Die Linsen 200 bilden mit entsprechenden Bereichen des transparenten Substrats 170 die refraktiven Elemente 130 aus.

Durch ein entsprechendes Ätzverfahren kann nun oder bereits im Vorfeld der Linsenerzeugung zwischen die beiden Strahlformungselemente 110-1, 110-2 die Trennstruktur 165 eingebracht worden. Wie in Fig. 2 gezeigt ist, erstreckt sich hierbei die Trennstruktur 165 von der Vorderseite 190, ausgehend nicht bis zur Rückseite 180. Es bleibt vielmehr im Bereich zwischen den beiden Strahlformungselementen 110 ein Substratbereich 210 stehen, der zur mechanischen Stabilisierung des Strahlformers beitragen kann. Gerade im Hinblick hierauf ist jedoch zu beachten, dass es sich hierbei bei weitem nicht um ein zwingendes Merkmal handelt. So können bei einer entsprechenden Prozessführung und einer entsprechenden zweidimensionalen Anordnung der Strahlformungselemente 110 Gräben auch deutlich weiter als in Fig. 2 gezeigt, durch das Substrat 170 getrieben werden. Grundsätzlich ist es auch möglich, einen solchen Graben vollständig durch das Substrat 170 hindurchtreten zu lassen, wenn ggf. andere stabilisierende Maßnahmen ergriffen werden.

Darüber hinaus besteht die Möglichkeit ergänzend einen entsprechenden Graben 165 mit Hilfe eines Trennmaterials oder einer komplexeren Trennstruktur zu verfüllen. So ist es beispielsweise möglich, in den Graben, der in Fig. 2 gezeigt ist, eine oder mehrere Schichten einzubringen, die reflektierend oder absorbierend für die betreffende Strahlung wirken. Hierdurch ist es ggf. möglich, die einzelnen Strahlformungselemente 110 voneinander optisch zu isolieren, um die Lichtausbeute der einzelnen Strahlformungselements 110 zu erhöhen oder auch die Einstrahlung von Fremdlicht zu reduzieren oder gar zu unterbinden.

Fig. 3 zeigt einen weiteren Strahlformer 100 gemäß einem Ausführungsbeispiel der vorliegenden Erfindung, der sich von dem in Fig. 1 gezeigten Ausführungsbeispiel im Wesentlichen dadurch unterscheidet, dass links neben dem ersten Strahlformungselement 110-1 ein weiteres Strahlformungselement 110-1' vom gleichen Typ angeordnet ist und dass anstelle des dritten Strahlformungselements 110-3 ein Strahlformungselement 110-2' eingesetzt ist, das vom gleichen Typ wie das zweite Strahlformungselement 110-2 ist. Anders ausgedrückt illustriert Fig. 3 die Möglichkeit, dass die einzelnen Strahlformungselemente 110 der Vielzahl von Strahlformungselementen nicht jeweils unterschiedlichen Typen angehören müssen. Es existiert lediglich eine Mehrzahl von Typen, denen ein Strahlformungselement 110 jeweils angehört.

Anders ausgedrückt, gehört zwar jedes Strahlformungselement 110 typischerweise genau einem Typ von Strahlungsformelementen mit entsprechenden, unterschiedlichen optischen Eigenschaften an, die Zahl der Typen ist jedoch in vielen Fällen geringer als die Zahl der Strahlformungselemente 110 eines Strahlformers 100.

Strahlformer 100 gemäß Ausführungsbeispielen der vorliegenden Erfindung ermöglichen es so, eine kompakte und effiziente Erzeugung einer komplexen Abstrahlcharakteristik oder eines komplexen Abstrahlprofils einer leuchtenden Fläche einer - im Grunde genommenen - beliebigen Ausdehnung und Form zu erzeugen. Aufgrund der Vielzahl der möglichen Implementierungen von Typen von Strahlformungselementen 110 können Strahlformer zur effizienten Erzeugung von nahezu beliebigen flächenhaften Abstrahlprofilen realisiert werden.

Als Lichtquellen können hierbei einerseits Flächenlichtquellen, also beispielsweise organische Leuchtdioden (OLED = organic light emitting diode) zum Einsatz kommen, bei denen die transversale Ausdehnung der letztlich leuchtenden Fläche annähernd mit der Größe der eigentlichen Flächenlichtquelle übereinstimmt. Andererseits können auch einzelne Quellen oder Ensembles von Quellen mit einer kleineren Ausdehnung, also beispielsweise halbleitende oder anorganische Leuchtdioden, also die letztlich, leuchtende Fläche verwendet werden. Neben den bezeichneten Lichtquellen können auch solche verwendet werden, die in reflektierenden Hausungen untergebracht sind, und daher ähnliche Abstrahlverhältnisse bieten.

Bevor jedoch weitere Ausführungsbeispiele der vorliegenden Erfindung detailliert beschrieben werden, wird zunächst der Begriff der beliebigen bzw. komplexen Abstrahlcharakteristik bzw. des Abstrahlprofils näher beleuchtet. Das Abstrahlprofil oder die Abstrahlcharakteristik ist durch eine orts- und winkelabhängige Leistungsdichte pro Flächenelement dA der leuchtenden Fläche und je Raumwinkelelement dΩ gemäß

$$\frac{dP}{dA\,d\Omega} = B(X, Y, \Theta, \Phi) \qquad\qquad (1)$$

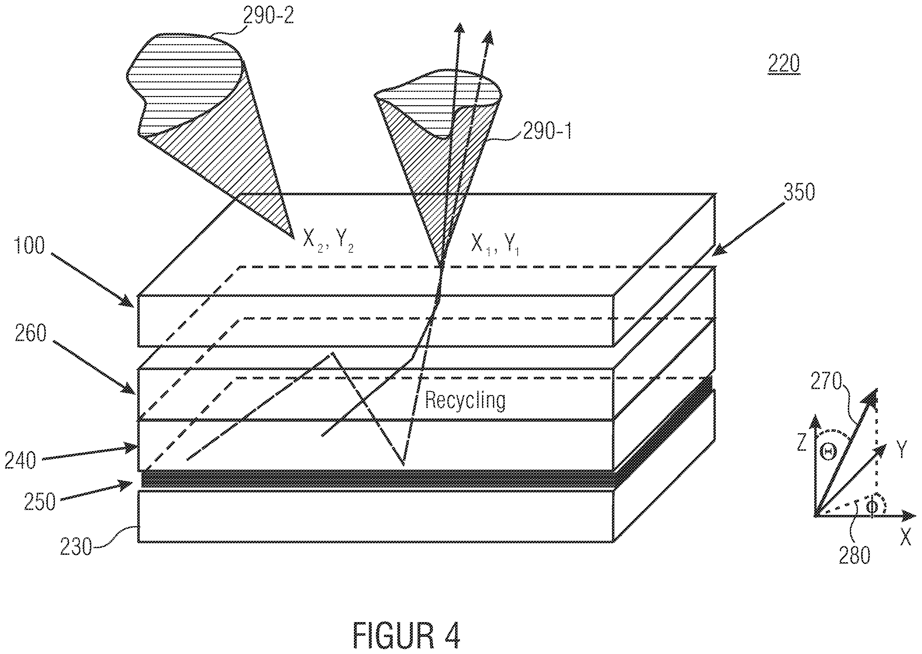

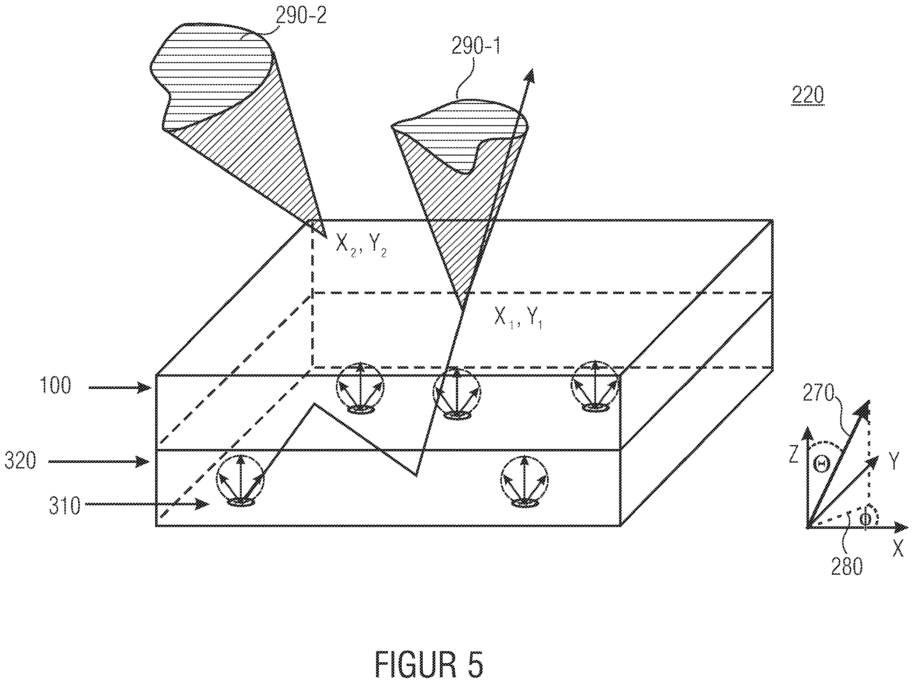

bestimmt. Hierbei sind P die abgestrahlte Lichtleistung der Lichtquelle, (X,Y) transversale Ortskoordinaten auf der leuchtenden Fläche und (Θ,Φ) die weiter unten erläuterten Strahlwinkel der Fernfeldstrahlen. Eine beliebige oder komplexe Abstrahlcharakteristik kann hierbei durch eine entsprechende Funktion $B(X,Y,\Theta,\Phi)$ bezeichnet werden. Diese bedeutet, dass jedem Punkt der leuchtenden Fläche eine unterschiedliche, durch den Strahlformer 100 einstellbare Lichtstrahl-Winkelverteilung zugeordnet ist. Dies wird im Zusammenhang mit den Fig. 4 und 5 im Folgenden näher illustriert.

Fig. 4 zeigt so anhand eines Ausführungsbeispiels der vorliegenden Erfindung eine Prinzipskizze zur Erzeugung einer komplexen Abstrahlcharakteristik einer organischen LED als Beispiel einer schlichten Lichtquelle mittels einer optionalen Auskoppelstruktur und einer im weiteren Verlauf noch näher beschriebenen Sekundäroptik in Form eines Strahlformers 100 gemäß einem Ausführungsbeispiel der vorliegenden Erfindung. So zeigt Fig. 4 eine Strahleinheit 220, die eine Abdeckungsstruktur 230 aufweist, die beispielsweise auch zur mechanischen Stabilisierung oder dem Schutz der Strahleneinheit 220 dienen kann. Eine solche Abdeckungsstruktur kann beispielsweise als Substrat oder auch als Teil einer Hausung ausgeführt sein.

Die Strahleinheit 220 umfasst ferner ein Substrat 240, welches das Substrat der eigentlichen organischen Leuchtdiode ist und daher auch als OLED-Substrat bezeichnet wird. Auf einer der Abdeckungsstruktur 230 zugewandten Seite ist daher auf dem Substrat 240 ein Schichtstapel 250 aufgebracht, der die eigentliche organische Leuchtdiode, also die funktionale Schichtstruktur zur Erzeugung des Lichts darstellt. Entsprechend wird dieser Schichtstapel 250 auch als OLED-Schichtstapel bezeichnet. Die Abdeckungsstruktur 230 dient in einem solchen Fall ebenfalls als Verkapselungstruktur zum Schutz des Schichtstapels 250.

Bei anderen Ausführungsformen der vorliegenden Erfindung kann der OLED-Schichtstapel 250 auch auf dem "unteren" der beiden Substrate 230, 240 abgeschieden werden. In einem solchen Fall wären also die beiden Substrate 230, 240 hinsichtlich ihrer Anordnung bzw. ihrer Funktion vertauscht, wobei der OLED-Schichtstapel 250 weiterhin zwischen beiden Substraten angeordnet wäre (ggf. "Drehung des Substrats 240 in Fig. 4).

Auf der dem Schichtstapel 250 abgewandten Seite des Substrats 240 ist eine optionale Auskoppelstruktur 260 als Primäroptik aufgebracht. Auf der Auskoppelstruktur 260 ist dann an der dem Substrat 240 abgewandten Seite ein Strahlformer 100 gemäß einem Ausführungsbeispiel der vorliegenden Erfindung umfasst, der das nachfolgend noch näher erläuterte Abstrahlprofil (Abstrahlcharakteristik) realisiert. Die Abstrahlrichtung wird hierbei durch die beiden Winkel Θ und Φ gegeben, die die Winkel bezüglich eines kartesischen Koordinatensystems beschreiben, wie dies in Fig. 4 rechts unten dargestellt ist.

Eine X-Achse und eine Y-Achse des in Fig. 4 rechts unten gezeigten Koordinatensystems bezeichnen eine Ebene, die parallel zu der OLED-Schichtstruktur 250 liegt. Aufgrund der im Wesentlichen vorhandenen Parallelität der Abdeckungsstruktur 230, des Substrats 240, der Auskoppelstruktur 260 und des Strahlformers 100 bezeichnen diese beiden Koordinatenachsen ebenso eine Ebene, an der die Strahlen, die das Abstrahlprofil bilden, den Strahlformer 100 verlassen. Daher sind auch Informationen bezüglich eines Ortes, die sich auf den Strahlformer 100 beziehen, durch entsprechende X-Koordinaten und Y-Koordinaten wiedergebbar.

Darüber hinaus umfasst das in Fig. 4 rechts unten gezeigte Koordinatensystem ebenfalls eine Z-Achse, die senkrecht zu der X-Achse und der Y-Achse verläuft und daher ebenfalls senkrecht zu den vorgenannten Schichten und Strukturen der Strahleinheit 220 verläuft. Eine beliebige Richtung 270 kann daher einerseits durch den Winkel Θ, den sie mit der Z-Achse einschließt, und durch einen Winkel Φ beschrieben werden, den eine Projektion 280 der Richtung 270 in die durch die X-Achse und die Y-Achse definierte Ebene mit der X-Achse einschließt.

Die Abstrahlcharakteristik nach Gleichung (1) bedeutet also, dass jedem Punkt der leuchtenden Fläche der Strahleinheit 220 eine ggf. unterschiedliche, durch den Strahlformer 100 eingestellte Lichtstrahl-Winkelverteilung aufweist. In Fig. 4 wird dieser Sachverhalt durch zwei unterschiedliche Licht-Abstrahl-Kegel 290-1, 290-2 an den beiden Orten $(X_1, Y_1)$ und $(X_2, Y_2)$ dargestellt. Es werden somit sowohl beliebige Nahfelder direkt an der leuchtenden Fläche als auch beliebige Fernfeldverteilungen erzeugt.

Zur Erzeugung von leuchtenden Flächen können, wie oben bereits angedeutet wurde, Flächenlichtquellen wie z.B. organische Leuchtdioden (OLED) verwendet werden. Dies ist in Fig. 4 gezeigt, wobei die organische Leuchtdiode nicht zuletzt durch das OLED-Substrat 240 und den OLED-Schichtstapel 250 gebildet wird. Die hierbei entstehende Abstrahlcharakteristik im Fernfeld wird durch den internen Aufbau der Flächenlichtquelle bestimmt. Die abgestrahlte Leistungsdichte der Quelle

$$\frac{dPsource}{dAd\Omega} = B_{source}(X, Y, \Theta, \Phi) \qquad\qquad (2)$$

ist durch den internen Aufbau fest vorgegeben. Die Abstrahlung erfolgt in der Regel in den gesamten Halbraum mit $\Theta$ zwischen 0° und 90° und $\Phi$ zwischen 0° und 360°.

Sieht man von verschiednen Kontaktierungsphänomenen bzw. Spannungsabfällen über der OLED-Fläche des Schichtstapels 250 ab, kann in guter Näherung die Leistungsdichte einer organischen Leuchtdiode als unabhängig von den transversalen Koordinaten (X, Y) und dem Azimutwinkel $\Phi$ angesehen werden. Es ergibt sich somit die Leistungsdichte der Quelle als vereinfachte Form von Gleichung (2) zu

$$\frac{dP_{source}}{dAd\Omega} = B_{source}(\Theta) \qquad . \qquad\qquad (3)$$

Eine Abstrahlung erfolgt hierbei im Allgemeinen für alle Polarwinkel zwischen $\Theta$ zwischen 0° und 90°.

Zur Erzeugung von beliebigen Abstrahlcharakteristika oder Abstrahlprofilen sind optische Strahlformer 100 mit potentiell zusätzlichen Auskoppeloptiken daher ratsam. Um die gesamte Lichteinheit bzw. Strahleinheit 220 so kompakt wie möglich zu halten, und den Vorteil der geringen Dicke von einigen Flächenlichtquellen, wie beispielsweise die organischen Leuchtdioden, nicht durch voluminöse Optiken aufzuheben, wäre es daher erstrebenswert, dass die strahlformende Optik, also der Strahlformer 100 und die ggf. enthaltende Auskoppeloptik 260 annähernd die gleiche Ausdehnung wie die Flächenlichtquelle selber besitzen, eine möglichst geringe Dicke von bevorzugt nicht mehr als 5 mm, 2 mm oder 1 mm aufweisen und direkt auf oder vor der Flächenlichtquelle angebracht sind.

Aus dieser Dimensionierung der Optik folgt, dass aufgrund des physikalischen Erhaltungssatzes der Etendue eine solche Strahlformung nur mit relativ großen Verlusten an abgestrahlter Gesamtleistung erreichbar ist. Strahlformer 100 gemäß Ausführungsbeispielen der vorliegenden Erfindung können daher - bei geeigneter Auslegung derselben - und unter ggf. einer Einbeziehung der optionalen Auskoppelstruktur 260 dennoch einen Intensitätserhöhung innerhalb der Zielverteilung bei möglichst geringem Störlichtanteil realisieren.

Zur Erzeugung von leuchtenden Flächen mit speziellen Abstrahlcharakteristiken können Quellen bzw. Ensembles von Quellen mit einer kleineren Ausdehnung als die leuchtende Fläche eingesetzt werden. Beispiele hierfür stellen anorganische Leuchtdioden, also beispielsweise Halbleiterleuchtdioden dar. Hierbei haben diese häufig spezifische Abstrahlcharakteristika, beispielsweise ein quasi Lambertsches Verhalten von anorganischen Leuchtdioden ohne Optik. Um eine leuchtende Fläche mit vorgegebener, beliebiger Abstrahlcharakteristik zu realisieren, ist daher häufig ein Einsatz von Optikanordnungen ratsam, um das Licht der Quelle(n) auf die Größe der leuchtenden Fläche zu verteilen, eine Lichthomogenisierung zu erzeugen und eine Strahlformung, also ein Einstellen einer Leistungsdichte gemäß Gleichung (1) zu ermöglichen. Eine einfache und kompakte Anordnung mit einer kleinen Optikdicke, wie sie häufig wünschenswert sind, ist so beispielsweise in Fig. 5 gezeigt.

Fig. 5 zeigt eine weitere Strahleinheit 220, die im Unterschied zu der in Fig. 4 gezeigten Strahleinheit 220 auf einer Lichtquelleneinheit 300 basiert, die eine Mehrzahl oder Ensemble von individuellen Lichtquellen 310 aufweist. Bei diesen Lichtquellen 310 kann sich es sich beispielsweise um individuelle anorganische Leuchtdioden (z.B. Halbleiter-Leuchtdioden) handeln, die an oder auf einem gemeinsamen Substrat implementiert sind. Ebenso können die einzelnen oder die weiteren individuellen Lichtquellen in einer gemeinsamen Hausung untergebracht sein, wie dies weiter unten noch erläutert wird. Der Einfachheit halber ist in Fig. 5 eine vereinfachte Form der Lichtquelleneinheit 300 gezeigt, bei der lediglich zwei individuelle Lichtquellen 310 im vorderen Bereich als solche hervorgehoben sind.

In Strahlrichtung der Lichtquellen 310 ist auf der Lichtquelleneinheit 300 ein Strahlformer 100 gemäß einem Ausführungsbeispiel der vorliegenden Erfindung angeordnet. Auch der Strahlformer 100 weist eine entsprechende Austrittsfläche auf, aus der die Strahlen mit der durch den Strahlformer 100 bestimmten Abstrahlcharakteristik austreten. Analog zu der Darstellung in Fig. 4 sind auch in Fig. 5 wiederum zwei Licht-Abstrahlkegel 290 für zwei unterschiedliche Orte auf der entsprechenden Oberfläche des Strahlformers 100 wiedergegeben, die durch ihre Koordinaten auf der X-Achse und der Y-Achse gekennzeichnet sind. Das rechts unten in Fig. 5 wiedergegebene Koordinatensystem entspricht hierbei dem in Fig. 4 gezeigten.

Anders ausgedrückt zeigt somit Fig. 5 eine Prinzipskizze zur Erzeugung einer beliebigen Abstrahlcharakteristik auf Basis eines Ensembles von Lichtquellen 310. Je nach konkreter Implementierung können die einzelnen Lichtquellen 310 optional in eine reflektierende Hausung 320 eingebracht werden. Alternativ zu einer reflektierenden Hausung können selbstverständlich auch andere Hausungen, etwa absorbierende eingesetzt werden, die jedoch dann ggf. kein "Recycling" des emittierten Lichts, das die Lichtquelleneinheit 300 an den Seitenflächen zu verlassen sucht, ermöglicht.

Der Strahlformer 100 wird häufig, unabhängig davon, ob eine weitere Auskoppelstruktur 260 tatsächlich implementiert ist, auch als Sekundäroptik bezeichnet. Hierbei handelt es sich mehr um eine historisch gewachsene als eine technisch notwendige Bezeichnung, da je nach konkreter Ausgestaltung eines Strahlformers gemäß einem Ausführungsbeispiel der vorliegenden Erfindung eine Implementierung einer Auskoppelstruktur 260 oder einer weiteren Strahlformungsoptik ggf. entfallen kann, wie weiter unten noch gezeigt wird.

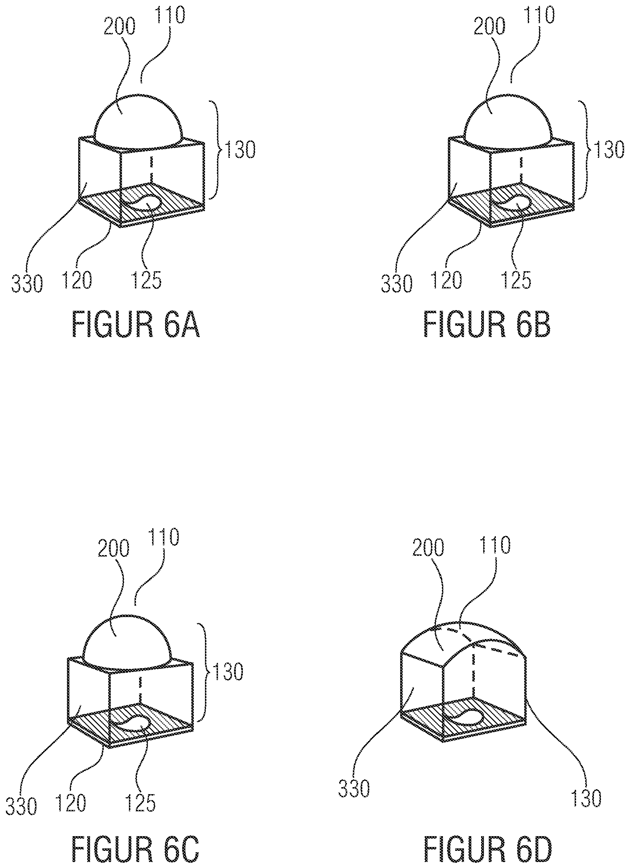

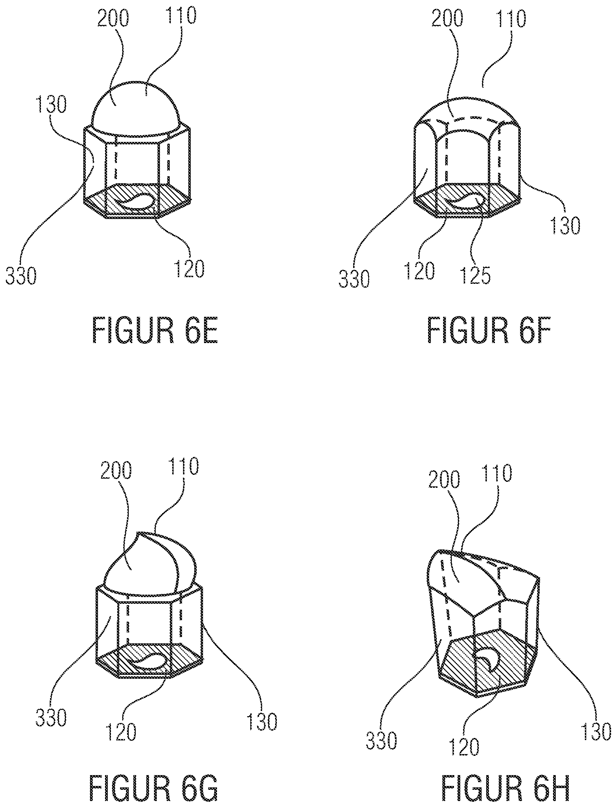

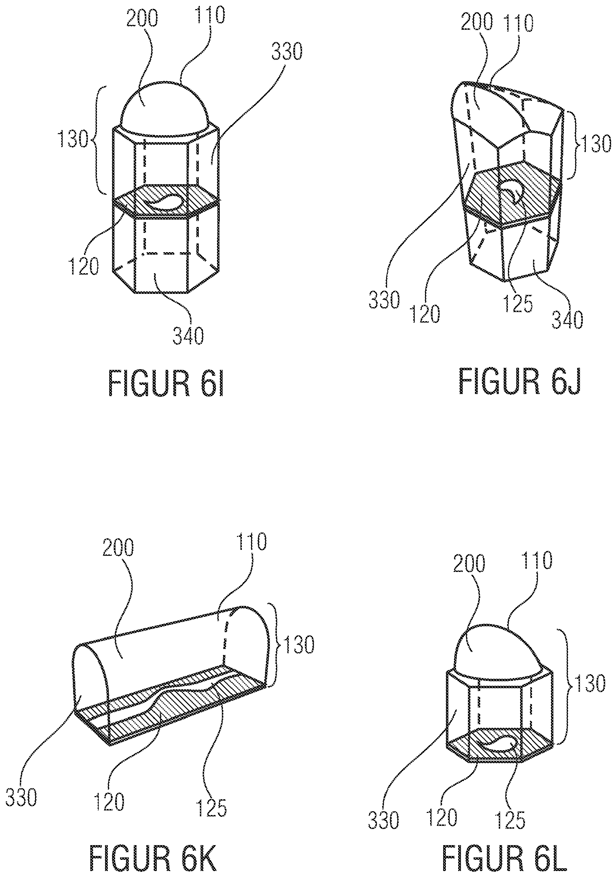

Im Folgenden werden weitere Ausführungsbeispiele von Strahlformern 100 gemäß Ausführungsbeispielen der vorliegenden Erfindung beschrieben. Hierbei wird eine "modulare Beschreibung" angewendet, bei der nicht zuletzt im Hinblick auf die Fig. 6 bis 8 verschiedene Details von Strahlformern 100 beschrieben. Diese sind im Rahmen von unterschiedlichen Ausführungsbeispielen der vorliegenden Erfindung beliebig kombinierbar, sofern die entsprechenden Rahmenbedingungen an die Prozessführung bei der Herstellung und geometrische Erwägungen berücksichtigt werden.

Ein Strahlformer 100 gemäß einem Ausführungsbeispiel der vorliegenden Erfindung basiert typischerweise auf einem großen Ensemble eindimensional oder zweidimensional angeordnete Abstrahlformungselemente 110, die auch als Einzelkanäle bezeichnet werden. Jeder dieser Einzelkanäle 110 umfasst hierbei typischerweise ein maßgeschneidertes, bildseitig angeordnetes refraktives Element 130 und ein entsprechendes intensitätsmodulierendes Element 120. Dieses kann in verschiedenen Ausführungsformen, beispielsweise eine reflektierende oder eine absorbierende oder auch eine sowohl reflektierende, quellseitig angeordnete und absorbierende, in Richtung des refraktiven Elements angeordnete Blende aufweisen. Diese kann beispielsweise an einer Unterseite des betreffenden Strahlformers 100, also quellseitig, aufgebracht werden oder angeordnet sein, wobei die einzelnen Blenden häufig eine sehr kleine Dicke im Bereich unter 100 pm, unter 10 $\mu$m oder sogar unter 1 $\mu$m aufweisen.

Dieser Grundaufbau, der auch schon im Zusammenhang mit den Fig. 1 bis 3 erläutert wurde, ist nun hinsichtlich der genauen Ausgestaltung der Strahlformungselemente sehr großen Freiheiten unterworfen. Fig. 6 zeigt in Detailabbildungen a bis 1 verschiedene mögliche Grundaufbauten von Einzelkanälen 110 des Strahlformers 100.

Fig. 6a zeigt so ein erstes Strahlformungselement 110 mit einem refraktiven Element 130, das eine Abstandsschicht 330 aufweist, die auch als "Spacer" bezeichnet wird und ggf. Teil eines gemeinsamen Substrats verschiedener Strahlformungselemente 110 sein kann. Auf der Abstandsschicht 330 ist eine Linse 200 in Form einer (halb-)sphärischen Linse aufgebracht, die ebenfalls Teil des refraktiven Elements 130 ist.

Das Strahlformungselement 110 weist darüber hinaus ein als Blende ausgeführtes intensitätsmodulierendes Element 120 mit einer entsprechenden Blendenöffnung als intensitätsmodulierender Struktur 125 auf. Die Blende 120 ist hierbei als absorbierende Blende ausgeführt.

Das in Fig. 6b Strahlformungselement 110 unterscheidet sich von dem in Fig. 6a gezeigten lediglich hinsichtlich der Ausgestaltung der Blende 120. Dieser ist bei dem in Fig. 6b gezeigten Strahlformungselement 110 als eine reflektierende Blende implementiert.

Fig. 6c zeigt eine weitere Ausführungsform eines Strahlformelements 110, wobei anstatt einer absorptiven Blende, wie sie in Fig. 6a gezeigt ist, eine sowohl reflektive als auch absorptive Blende implementiert ist, die zusammen das intensitätsmodulierende Element 120 bilden. Hierbei ist der reflektive Teil der Blende unterseitig angebracht, während der absorptive Teil dem refraktiven Element 130 zugewandt ist.

Ansonsten unterscheiden sich die in den Fig. 6a bis 6c gezeigten Strahlformungselemente 110 nicht voneinander. Ihnen ist beispielsweise gemein, dass sie eine rechteckige oder quadratische Kanalgeometrie aufweisen und dass das jeweilige refraktive Element 130 eine Linse mit einer Linsentotzone aufweist, die auf einer Abstandsschicht 330 (Spacer) angeordnet ist. Lediglich im Hinblick auf die als intensitätsmodulierende Elemente 120 dienenden Blenden unterscheiden sich die einzelnen Strahlformungselemente 110. Diese drei Varianten stellen einerseits eine rein absorptive Blende (Fig. 6a), eine rein reflektive Blende (Fig. 6b) oder eine kombinierte absorptive/reflektive Blende (Fig. 6c) dar, wobei grundsätzlich ebenfalls die Möglichkeit besteht, die Schichtabfolge gegenüber der in Fig. 6c gezeigten Version umzukehren oder andere intensitätsmodulierende Schichten zu implementieren.

Fig. 6d zeigt ein weiteres Strahlformungselement 110, das eine rechteckige oder quadratische Kanalgeometrie aufweist, die diese bereits in den Fig. 6a bis 6c gezeigt wurde. Das reflektive Element 130 weist hierbei eine Linse 200 auf, die im Unterschied zu den in den Fig. 6a bis 6c gezeigten keinen Linsentotzone aufweist.

Als Linsentotzone wird hierbei ein Flächenanteil oder eine Fläche bezeichnet, die von der Linse 200 hinsichtlich ihrer Grundfläche nicht überdeckt wird, jedoch dem Strahlformungselement 110 als Grundfläche zuzurechnen ist. Umfasst das refraktive Element 130 eine Abstandsschicht 330 oder eine ähnliche Schicht, ergibt sich eine Totzone oder Linsentotzone bei der in Fig. 6 gezeigten Darstellung, wenn die auf der Abstandsschicht 330 angeordnete Linse 200 den Anteil der Abstandsschicht 330 des Strahlformungselements 110 nicht vollständig abdeckt.

Im Unterschied zu den in den Fig. 6a bis 6c gezeigten Strahlformungselementen 110 bedeckt die Linse 200 die Abstandsschicht 330 (Spacer) bezüglich des Teils, der dem Strahlformungselement 110 zuzurechnen ist, vollständig. Daher handelt es sich bei der in Fig. 6d gezeigten Ausführungsform um eine solche, die ein refraktives Element 130 mit einer Linse 200 ohne Linsentotzone aufweist.

Lediglich der Vollständigkeit halber soll bereits an dieser Stelle erwähnt werden, dass selbstverständlich auch bezüglich der in Fig. 6d gezeigten Ausführungsform die im Zusammenhang mit den Fig. 6a bis 6c erläuternden Variationen des intensitätsmodulierenden Elements 120 implementiert werden können.

Fig. 6e zeigt ein weiteres Strahlformelement 110, die sich im Vergleich zu der in Fig. 6b gezeigten Ausführungsform lediglich hinsichtlich der Grundfläche des Strahlformungselements unterscheidet. So weist die in Fig. 6b gezeigte Ausführungsform eine quadratische oder rechteckige Kanalgeometrie auf, während das Strahlformungselement 110 in Fig. 6e eine entsprechende hexagonale Kanalgeometrie umfasst. Hierbei ist, wie auch bei der in Fig. 6b gezeigten Ausführungsform, die Linse 200 als sphärische oder halbsphärische Linse mit einer Totzone implementiert. Dies bedeutet, dass in der gezeigten Ausführungsform die Abstandsschicht 330 hinsichtlich eines hexagonalen Bereichs dem Strahlformungselement 110 zuzurechnen ist.

Fig. 6f zeigt eine Ausführungsform eines Strahlformungselements 110, das sich von dem in Fig. 6e gezeigten Strahlformungselement lediglich dadurch unterscheidet, dass die Linse 200 ohne Linsentotzone implementiert ist. Anders ausgedrückt, existiert bei der in Fig. 6f gezeigten Ausführungsform kein Anteil der dem Strahlformungselement 110 zuzurechnenden Grundfläche, die nicht von der Linse 200 bedeckt ist.

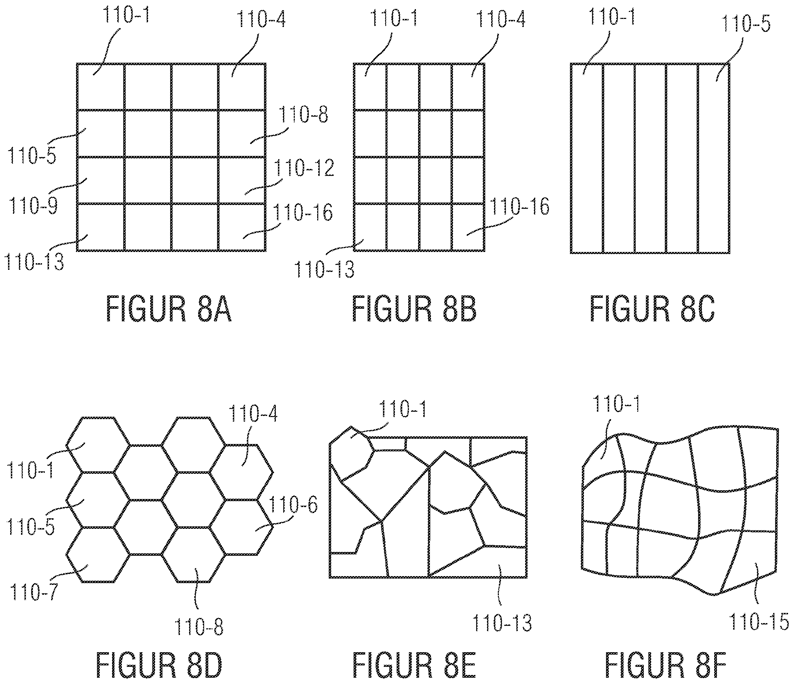

Im Hinblick auf die Frage der Zurechenbarkeit der Grundfläche beispielsweise der Abstandsschicht 330 zu den einzelnen Strahlformungselementen 110 wird im Zusammenhang mit Fig. 8 noch näher eingegangen werden. Dieser ist häufig durch die Anordnung der einzelnen intensitätsmodulierenden Strukturen 125, also im Falle von Blenden durch die Anordnung der Blendenöffnungen gegeben. Eine entsprechende Aufteilung der zur Verfügung stehenden Grundfläche eines Strahlformers 100 gemäß einem Ausführungsbeispiel der vorliegenden Erfindung kann selbstverständlich darüber hinaus ebenfalls durch das Einbringen entsprechender Trennstrukturen, wie sie in Fig. 2 bereits gezeigt wurden, erfolgen. In einem solchen Fall können beispielsweise die entsprechenden Grundflächen der Strahlformungselemente 110 durch Gräben oder andere Trennstrukturen als solche auch physikalisch in dem Strahlformer realisiert sein.

Fig. 6g zeigt eine weitere Ausführungsform eines Strahlformungselements 110, das sich von dem in Fig. 6g gezeigten Strahlformungselement 110 im Wesentlichen dadurch unterscheidet, dass anstelle der sphärischen Linse 200 mit einer Totzone nunmehr ein optisches Freiform-Element 200 mit einer Totzone auf einer Abstandsschicht 330 als refraktivem Element 130 auf einer hexagonalen Geometrie implementiert ist. Auch hier existiert folglich ein Bereich, der der Grundfläche des Strahlformungselements 110 zuzurechnen ist und nicht von dem optischen Freiform-Element 200 abgedeckt ist.

Demgegenüber zeigt Fig. 6h ein weiteres Strahlformungselement 110 mit einer hexagonalen Kanalgeometrie und einer Linse 200 in Freiformtechnik, die jedoch im Unterschied zu der in Fig. 6g gezeigten Linse keine Totzone aufweist. Anders ausgedrückt bedeckt das optische Freiform-Element 200 aus Fig. 6h die dem Strahlformungselement 110 zuzurechnende Grundfläche vollständig.

Fig. 6i zeigt eine weitere Ausführungsform eines Strahlformungselements 110, das dem in Fig. 6e gezeigten stark ähnelt. Genauer gesagt unterscheidet sich das in Fig. 6e gezeigte Strahlformungselement 110 lediglich von dem in Fig. 6e gezeigten dadurch, dass das Strahlformungselement 110 eine weitere Schicht 340 aufweist, die an das intensitätsmodulierende Element 120 an der dem refraktiven Element 130 abgewandten Seite angrenzt. Hierbei kann es sich beispielsweise um zu Stabilitätszwecken, zur Justierung des Abstandes oder aus fertigungstechnischen Gründen zusätzlich eingebrachtes Substrat handeln, das bei einer fertigen Anordnung zu einer Strahleinheit 220 zwischen dem intensitätsmodulierenden Element 120 und den eigentlichen Lichtquellen liegt. Die weitere Schicht 340 kann so beispielsweise auch ein Teil der Auskoppelstruktur 260 sein. Je nach konkreter Implementierung kann es daher ratsam sein, die weitere Schicht 340 als ebenfalls transparent in dem betreffenden Spektralgebiet der Strahlung auszulegen. Gerade dies ist jedoch keine zwingende Voraussetzung, da beispielsweise in die weitere Schicht 340 auch der Blendenöffnung entsprechende Kanäle einbringbar sind.

Fig. 6j zeigt ein weiteres Ausführungsbeispiel eines Strahlformungselements 110, das im Wesentlichen dem in Fig. 6h gezeigten entspricht. Es unterscheidet sich von dem lediglich dadurch, dass eine weitere Schicht 340 an die dem refraktiven Element 130 abgewandte Seite des intensitätsmodulierenden Elements 120 angebracht wurde, wie dies auch im Falle des in Fig. 6i gezeigten Strahlformungselements 110 geschehen ist. Anders ausgedrückt zeigen die Fig. 6i und 6j jeweils Strahlformungselemente 110 mit zusätzlichen, unterseitig angebrachten Substraten oder anderen weiteren Schichten 340. Fig. 6i basiert hierbei auf einer halbsphärischen Linse im Rahmen des refraktiven Elements 130, während bei dem Strahlformungselement 110 ein optisches Freiform-Element im Rahmen des refraktiven Elements 130 implementiert ist.

Fig. 6k zeigt ferner eine weitere Ausführungsform eines Strahlenformungselements 110, das sich von den zuvor gezeigten Strahlformungselementen nicht zuletzt dadurch unterscheidet, dass das Strahlformungselement 110 in diesem Fall eine längsgestreckte Grundfläche aufweist. Das refraktive Element 130 weist wiederum eine Abstandsschicht 330 auf, auf der eine Linse 200 aufgebracht ist. Bei dieser handelt es sich um eine Zylinderlinse bzw. eine Halbzylinderlinse mit einer konvexen Brechungsfläche und einer planen, in unmittelbarem Kontakt mit der Abstandsschicht 330 stehenden planen Brechungsfläche. Das intensitätsmodulierende Element 120 ist entsprechend als längsgestreckte Blende mit einer komplexeren Blendenöffnung als intensitätsmodulierenden Struktur 125 ausgeführt. Das Strahlformungselement 110 kann eine Länge entlang einer Vorzugsrichtung aufweisen, die ein Vielfaches einer entsprechenden Breite senkrecht zu der Ausbreitungsrichtung aufweist. Häufig ist so eine entsprechende Länge mehr als 5-mal, mehr als 10-mal, mehr als 20-mal oder mehr als 50-mal länger im Vergleich zu einer entsprechenden Breite. Aus diesem Grund wird ein entsprechendes Strahlformungselement 110 folglich auch als eindimensionale Linse oder Zylinderlinse mit einer entsprechend längsgestreckten Blendengeometrie bezeichnet.

Fig. 6i zeigt schließlich als weitere Ausführungsform ein Strahlformungselement 110, das eine polygonale Kanalgeometrie aufweist. Auch hier ist wiederum im Rahmen des refraktiven Elements 130 ein optisches Freiform-Element 200 mit einer Totzone auf einer Abstandsschicht 330 (Spacer) implementiert.

Wie bereits zuvor erläutert wurde, zeigen die in Fig. 6 dargestellten verschiedenen Ausführungsformen der Strahlformungselemente 110 lediglich einen kleinen Ausschnitt der möglichen Implementierungen. So können sich die entsprechenden Strahlformungselemente hinsichtlich ihrer Grundfläche und ihrer Größe bei verschiedenen Implementierungen von Strahlformern, aber auch im Rahmen eines einzelnen Strahlformers deutlich unterscheiden. Neben rechteckigen oder quadratischen Grundformen sind ebenso hexagonale, polygonale oder irregulär geformte Grundflächen möglich. Ebenso sind eindimensionale Strukturen möglich, bei denen eine Vorzugsrichtung ein Vielfaches (z.B. das 5-fache oder mehr) der Breite der entsprechenden Struktur aufweist. Auch hinsichtlich der absoluten Größen können die einzelnen Strahlformungselemente sowohl von Strahlformer zu Strahlformer als auch hinsichtlich unterschiedlicher Typen eines einzelnen Strahlformers sich massiv unterscheiden.

Typische Größen für Strahlformungselemente 110, also einzelne Kanäle 110, liegen daher im Bereich von etwa 10 $\mu$m bis hin zu 10 mm. Anders ausgedrückt können sich unterschiedliche Strahlformungselemente 110 hinsichtlich ihrer Größe durchaus um drei Größenordnungen unterscheiden. Je nach konkreter Anwendung, für die ein Strahlformer 100, gemessen am Ausführungsbeispiel der vorliegenden Erfindung vorgesehen ist, können hierbei tendenziell eher kleinere Strahlformelemente 110 mit charakteristischen Größen im Bereich zwischen 10 $\mu$m und 100 pm, jedoch auch größere Strahlformelemente mit Größen über 100 $\mu$m implementiert werden.

Hinsichtlich der Auswahl der möglichen Materialien steht eine Vielzahl von verschiedenen Implementierungsalternativen zur Verfügung. So besteht beispielsweise die Möglichkeit, dass refraktive Element 130 vollständig oder auch ggf. lediglich teilweise, z.B. bezüglich der Linse 200, aus einem transparenten organischen Material zu fertigen. Hierzu können unterschiedliche Polymere oder andere organische Substanzen verwendet werden. Grundsätzlich besteht aber auch die Möglichkeit, kristalline und/oder anorganische Materialien zu verwenden.

Hinsichtlich der intensitätsmodulierenden Elemente 120 können entsprechende reflektierende Blenden oder intensitätsmodulierende Strukturen 125 aus einem Metall (z, B. Aluminium), einem dielektrischen Spiegelsystem, einem diffus reflektierendem Material (z.B. Bariumsulfat) oder auch einer Kombination der vorgenannten Materialien gefertigt werden. Im Hinblick auf absorbierende intensitätsmodulierende Strukturen 125 können diese aus einem absorptiven Polymer, einem Gemisch aus Polymer und anderen absorptiven Substanzen, Schwarzchrom oder anderen Materialien erzeugt werden.

Darüber hinaus besteht, wie bereits zuvor kurz erwähnt wurde, die Möglichkeit, je nach Anwendung die Blendenöffnung oder andere intensitätsmodulierende Strukturen 125 in Form einer Aussparung (Luft) zu implementieren oder auch mit einem geeigneten, transparenten Material zu verfüllen. Im Falle eines Verfüllens mit einem transparentem Material kann dies beispielsweise mit dem gleichen Material geschehen, das auch für das refraktive Element verwendet wurde, so dass Sprünge hinsichtlich der Brechungsindizes vermieden oder zumindest vermindert werden können.

Darüber hinaus besteht die Möglichkeit, das Ensemble von Strahlformungselementen (Einzelkanälen) auf einem transparentem Substrat zu präparieren, wie dies in den Fig. 6i und 6j gezeigt wurde.

Im Hinblick auf die unterschiedlichen Parameter, Geometrien und Variationen besteht grundsätzlich die Möglichkeit, die Blendenöffnungen oder intensitätsmodulierenden Strukturen 125 in beliebiger Form oder Gestalt mit einer im Grunde genommenen beliebigen Lage innerhalb des Strahlformungselements 110 zu fertigen. Die refraktiven Elemente 130 können ferner beispielsweise sphärische oder asphärische Linsen aufweisen, wie diese in den Fig. 6a bis 6f und 6k gezeigt sind, oder auch Freiformelemente aufweisen, wie dies in den Fig. 6gh, 6h, 6j, 6I gezeigt ist. Optional können die refraktiven Elemente 130 eine entsprechende "Spacer-Schicht" oder Abstandsschicht 330 umfassen.

Hinsichtlich des refraktiven Elements 130 besteht so die Möglichkeit, Linsen 200 als sphärische oder asphärische Linsen mit oder ohne Totzonen zu implementieren. Ebenso besteht die Möglichkeit, optische Freiform-Elemente mit und ohne Totzonen zu implementieren, sowie im Falle eindimensionaler Strahlformelemente 110 entsprechende Zylinderlinsen vorzusehen. Je nach konkreter Implementierung besteht darüber hinaus die Möglichkeit, die Abstandsschicht 330 vorzusehen oder ggf. diese auch nicht zu implementieren.

Hinsichtlich des intensitätsmodulierenden Elements 120 kann eine intensitätsmodulierende Struktur 125 auf Basis eines absorptiven, eines reflektiven oder einer Kombination der vorgenannten Materialien definiert werden. Eine Form, eine Gestalt oder eine Größe der intensitätsmodulierenden Strukturen 125 kann hierbei im Rahmen der Randbedingungen, die die konkrete Implementierung ermöglicht, grundsätzlich frei bestimmt werden. Optional kann darüber hinaus eine weitere Schicht, beispielsweise in Form eines transparenten Substrats quellenseitig, also anders intensitätsmodulierende Elemente 120 auf der dem refraktiven Element 130 abgewandten Seite vorgesehen werden.

Darüber hinaus besteht die Möglichkeit, um einen möglichst großen Füllfaktor zu erreichen, die Linsen oder Freiformen 200 den gesamten Kanal oder das gesamte Strahlformungselement überdecken zu lassen bzw. die zugehörige Basisfläche so zu gestalten, dass möglichst geringe Totzonen erreichbar sind. Die Basisflächen der Linsen 200 können so beispielsweise kreisförmig, rechteckig, hexagonal, polygonal oder auch irregulär geformt sein, wie dies u.a.

in den Fig. 6a bis 6l gezeigt ist.

Die optischen und strukturellen Eigenschaften der Strahlformungselemente 110 bzw. der Einzelkanäle 110 können bezüglich Gruppen von Strahlformungselementen 110 der Vielzahl von Strahlformungselementen 110 des Strahlformers 100 sowohl gleich sein als sich unterscheiden. Hierbei ist es sowohl möglich, dass sich jedes Strahlformungselement zu Strahlformungselement, also jeder Kanal zu Kanal ändert, oder aber auch das mehrere Strahlformungselemente dem gleichen Typ mit den gleichen optischen Eigenschaften angehört. Im ersten Fall entspräche die Anzahl der Typen der Anzahl der Strahlformungselemente des Strahlformers, während im zweiten Fall die Zahl der unterschiedlichen Typen hinter der der Anzahl der Strahlformungselementen 110 zurückbleiben würde.

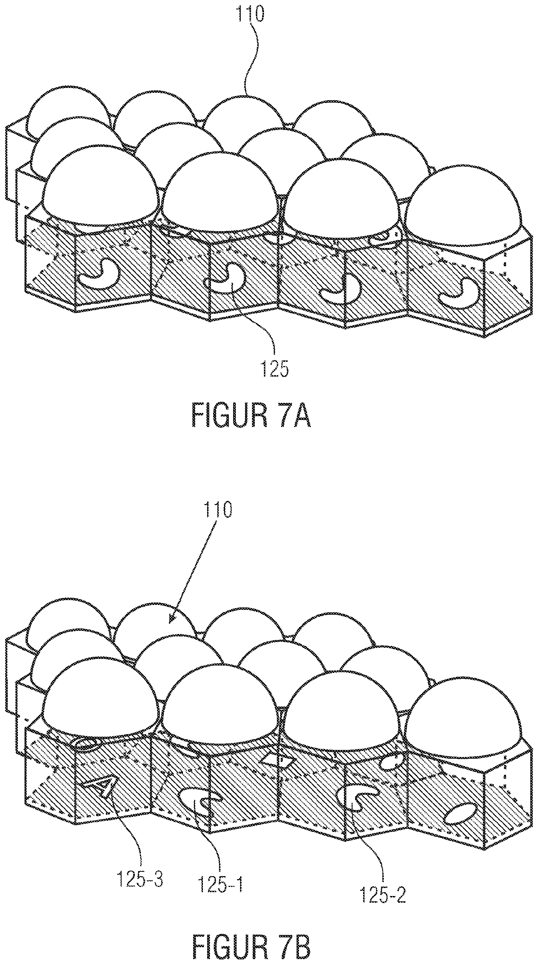

So zeigt Fig. 7a auf Basis des Strahlformungselements 110, wie es in Fig. 6e gezeigt ist, einen Ausschnitt aus einer Gruppe von Strahlformungselementen 110, die einem identischen bzw. gleichen Typ mit entsprechenden optischen Kanälen angehört. Im Unterschied hierzu zeigt Fig. 7b eine entsprechende Anordnung von Strahlformungselementen 110, die sich hinsichtlich der refraktiven Elemente 130 von dem in Fig. 6e gezeigten Strahlformungselementen 110 nicht unterscheiden, jedoch unterschiedliche intensitätsmodulierende Elemente 120 in Form unterschiedlicher Blenden aufweist. Hierbei variiert sowohl die Lage der einzelnen intensitätsmodulierenden Strukturen innerhalb der intensitätsmodulierenden Elemente (z.B. unterschiedliche Lage der intensitätsmodulierenden Strukturen 125-1, 125-2) als auch hinsichtlich unterschiedlicher Formen (z.B. intensitätsmodulierende Strukturen 125-1 und 125-3). Fig. 7 zeigt somit einen Ausschnitt aus einem Strahlformer 100 mit hexagonaler Kanalgeometrie, wobei in Teilabbildung a gleiche Kanaleigenschaften und in Teilabbildung b unterschiedliche Kanaleigenschaften vorherrschen.

Die optischen Eigenschaften der unterschiedlichen Typen können sich beispielsweise durch unterschiedliche Größen oder Formen der Strahlformungselemente 110, Form oder Gestalt der Blendenöffnungen, Lage der Blendenöffnungen im jeweiligen Kanal oder auch Form und Größe des refraktiven Elements ergeben.

Hinsichtlich der Anordnung der einzelnen Strahlformungselemente 110 im Rahmen eines Strahlformers 100 ergeben sich auch eine Vielzahl unterschiedlicher Möglichkeiten, die im Folgenden lediglich ausschnittsweise beschrieben werden können. Liegen beispielsweise gleiche Kanalquerschnittsflächen, also gleiche Kanalformen und gleiche Kanalgrößen vor, können die einzelnen Kanäle bzw. Strahlformungselemente 110 regulär zueinander angeordnet werden. Im Falle zweidimensionaler Anordnungen können so beispielsweise quadratische, rechteckige oder hexagonale Anordnungen gewählt werden. Im Falle einer eindimensionalen Anordnung besteht die Möglichkeit, die einzelnen Strahlformungselemente 110 im Rahmen einer Streifenanordnung zu platzieren. Dies ist beispielhaft in Fig. 8a bis 8d illustriert.

Fig. 8a zeigt eine erste Anordnungsmöglichkeit von einzelnen Strahlformungselementen 110 für einen Gesamtstrahlformer 100, bei eine quadratische Symmetrie vorliegt. So zeigt Fig. 8a eine quadratische Anordnung von 16 Strahlformungselementen 110-1 bis 110-16, von denen jeweils das erste und das letzte einer entsprechenden Reihe mit Bezugzeichen bezeichnet ist.

Fig. 8b zeigt eine entsprechende, Fig. 8a sehr ähnliche Anordnung von ebenfalls 16 Strahlformungselementen 110-1 bis 110-16, bei denen die einzelnen Strahlformungselemente 110 jedoch eine rechteckige Grundfläche aufweisen, so dass auch die Gesamtanordnung eine entsprechende rechteckige Symmetrie bzw. Grundfläche aufweist. In den Fällen der Fig. 8a und 8b ist daher eine Anpassung der Anordnungen an eine zugrunde liegende Substrat- oder Trägergröße möglich.

Fig. 8c zeigt eine mögliche Anordnung von eindimensionalen Strahlformungselementen 110, wie sie beispielsweise in Fig. 6k gezeigt sind. Die Anordnung in Fig. 8c umfasst fünf lineare oder eindimensionale Strahlformungselemente 110-1 bis 110-5, die in einer Richtung senkrecht zu ihrer Vorzugsrichtung nebeneinander angeordnet sind. Anders ausgedrückt, zeigt Fig. 8c eine streifenförmige Anordnung von Strahlformungselementen 110.

Fig. 8d zeigt eine hexagonale Anordnung mit einer entsprechenden hexagonalen Symmetrie von hexagonalen Strahlformungselementen 110, wie sie beispielsweise auch in den Fig. 6e bis 6j dargestellt sind. Die Anordnung aus Fig. 8d umfasst im vorliegenden Fall acht Strahlformungselemente 110-1 bis 110-8, kann jedoch selbstverständlich auch größer oder kleiner ausgeführt werden.

Im Falle unterschiedlicher Kanalquerschnittsflächen, was zu unterschiedlichen Kanalformen und Kanalgrößen führen kann, können irreguläre Anordnungen ggf. vorteilhaft sein, wie sie in Fig. 8e und 8f gezeigt sind. So besteht beispielsweise die Möglichkeit, durch eine entsprechend irreguläre Anordnung störende Moire-Effekte zu minimieren. Ebenso kann es ggf. möglich sein, bei unterschiedlichen Kanalquerschnittsflächen der einzelnen Strahlformungselemente 110 eine höhere Flächenausnutzung im Vergleich zu einer regelmäßigen Anordnung zu erzielen. Weiterhin besteht die Möglichkeit, dass, falls die Eingangsintensitäten entsprechend räumlich veränderlich sind, dass hierdurch die optische Leistung auf unterschiedliche Pixel steuerbar ist.

So zeigt Fig. 8e eine Anordnung von 13 Strahlformungselementen 110-1 bis 110-13, die irregulär polygonale Umfangslinien aufweisen. Im Unterschied hierzu zeigt Fig. 8f eine mögliche Anordnung von 15 unterschiedlichen Strahlformungselementen 110-1 bis 110-15, deren Begrenzungen durch irreguläre, aber stetig differenzierbare Kurven gegeben sind.

Selbstverständlich können auch andere Geometrien und andere geometrische Anordnungen als die in Fig. 8 gezeigten verwendet werden. So sind die entsprechenden Anordnungen nicht nur hinsichtlich ihrer Größe weder nach oben noch nach unten beschränkt, sondern auch hinsichtlich der einzelnen Anordnungen der einzelnen Strahlformelemente 110. Es besteht vielmehr eine große Freiheit im Bereich des Designs und der Auslegung des entsprechenden Strahlformers 100 gemäß einem Ausführungsbeispiel der vorliegenden Erfindung. Die einzelnen Strahlformungselemente 110 über den Strahlformer hinweg zu verteilen, um ein möglichst optimales, den Einsatzzwecken angepasstes Abstrahlprofil zu ermöglichen.

Eine Aufteilung eines zur Verfügung stehenden Platzes eines Substrats oder eines Trägers eines Strahlformers 100 gemäß einem Ausführungsbeispiel der vorliegenden Erfindung in einzelne Strahlformungselemente 110 kann beispielsweise durch eine Anordnung von Blenden bzw. Blendenöffnungen 125, durch eine Anordnung von Linsen 200 oder aber auch durch eine Implementierung von Trennstrukturen 165 möglich sein. Während im letzten Fall eine typischerweise strukturell vorgegebene Einteilung vorliegt, kann ggf. bei einer lediglich durch die Anordnung von Blendenöffnungen 125 vorgenommenen Einteilung der Strahlformungselemente 110 nicht eindeutig sein. Trotzdem ergeben sich in vielen Fällen eindeutige Zuordnungen von Kanalflächen.

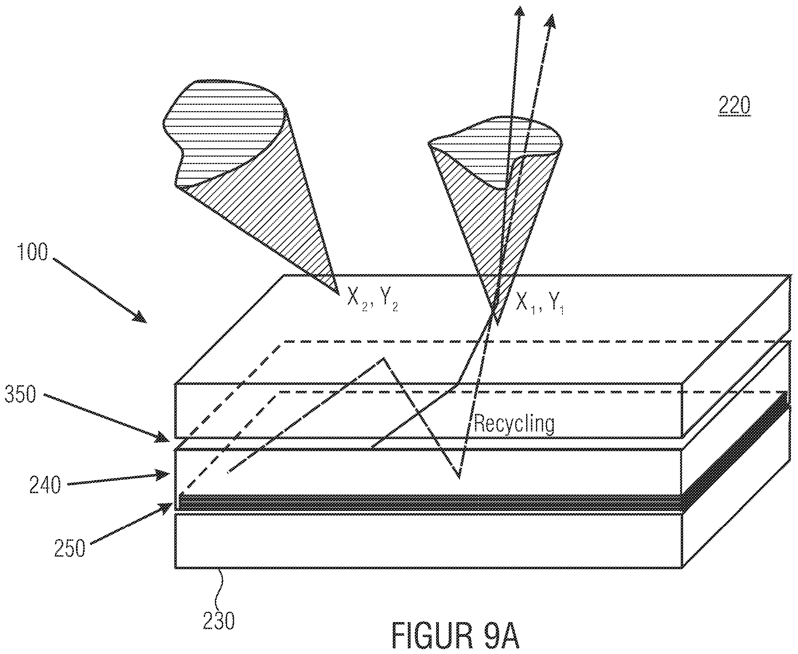

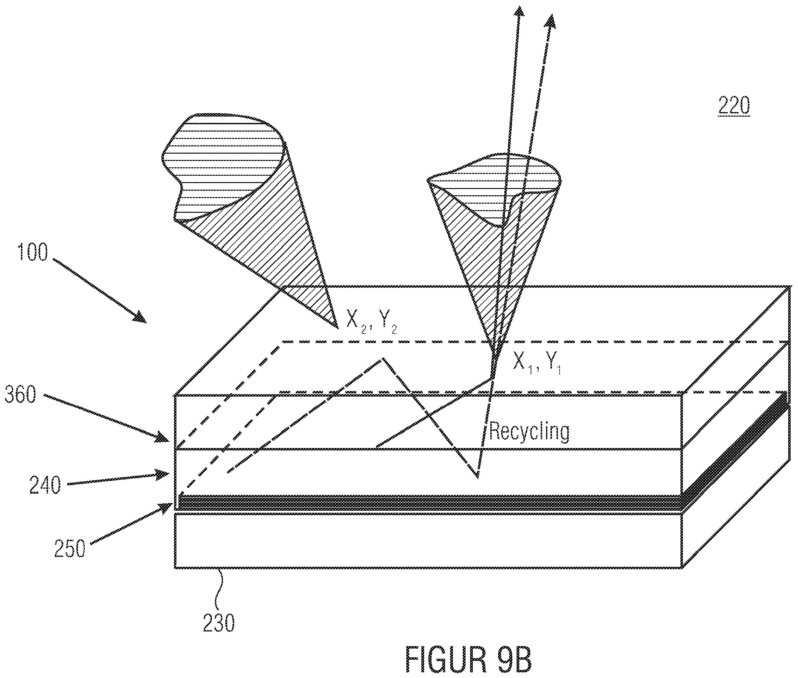

Im Hinblick auf die Fertigung einer vollständigen Strahleinheit 220, wie sie beispielsweise bereits in den Fig. 4 und 5 gezeigt wurde, also im Hinblick auf die Möglichkeit, eine Lichtquelle und einen Strahlformer zu der Strahleinheit zu kombinieren, gibt es verschiedene Möglichkeiten, wie das Gesamtelement auf die Flächenlichtquelle oder auch eine entsprechende reflektierende Hausung aufgebracht wird. Diese werden im Zusammenhang mit den Fig. 9a, 4 und 9b näher erörtert.

Bereits in Fig. 4a ist eine Variante gezeigt, bei der der Strahlformer 100 auf eine Flächenlichtquelle 250 mit einer zusätzlichen Auskoppeloptik 260 (z.B. einem sogenannt Pyramidenarray) direkt aufgebracht ist, wobei sich typischerweise ein Luftspalt 350 (in Fig. 4 gezeigt) zwischen der Auskoppeloptik 260 und dem Strahlformer 100 ausbildet.

Im Unterschied hierzu zeigt Fig. 9a eine der Fig. 4 sehr ähnlichen Möglichkeit des Aufbringens eines Strahlformers auf eine Flächenlichtquelle. So zeigt Fig. 9a ebenfalls eine Strahleinheit 220, die sich von dem Strahlformer 220 aus Fig. 4 im Wesentlichen dadurch unterscheidet, dass die in Fig. 9a gezeigte Strahleinheit 220 keine Auskoppelstruktur 260 aufweist. Der Strahlformer 100 gemäß einem Ausführungsbeispiel der vorliegenden Erfindung ist vielmehr direkt auf das OLED-Substrat 240 aufgebracht, so dass sich zwischen dem OLED-Substrat 240 und dem Strahlformer 100 ein Luftspalt 350 ausbildet. Anders ausgedrückt wird der Strahlformer 100 typischerweise derart auf die Flächenlichtquelle 250 direkt aufgebracht, dass ein Luftspalt zwischen Quelle bzw. ihrem Substrat 240 und dem Strahlformer 100 besteht.

Somit besteht zwischen den Strahleinheiten 220 aus den Fig. 9a und 4 ein wesentlicher Unterschied dahingehend, dass bei der in Fig. 9a gezeigten Strahleinheit 220 der Luftspalt 350 zwischen Quelle und Strahlformer besteht, während keine Substratauskoppeloptik in Form einer Auskoppelstruktur 260 vorhanden ist. Diese ist bei der in Fig. 4 gezeigten Strahleinheit 220 hingegen vorhanden, wobei der Luftspalt 350 sich zwischen dem Strahlformer 100 und der Substratauskoppeloptik bzw. der Auskoppelstruktur 260 befindet.

Eine weitere Möglichkeit, eine Strahleinheit 220 auf Basis eines Strahlformers 100 gemäß einem Ausführungsbeispiel der vorliegenden Erfindung zu schaffen, besteht darin, den Strahlformer 100 auf einen Flächenlichtquelle indexangepasst an das Lichtquellensubstrat aufzubringen. Dies kann beispielsweise mit Hilfe eines indexangepassten Kontaktmaterials (z.B. Klebstoff) geschehen, wobei aufgrund des indexangepassten Kontaktmaterials kein Luftspalt zwischen Quelle bzw. dem zugehörigen Substrat 240 und dem Strahlformer 100 besteht.

Diese Situation ist in Fig. 9b gezeigt. Die Darstellung in Fig. 9b entspricht hierbei im Wesentlichen der in Fig. 9a bzw. auch der in Fig. 4, so dass an dieser Stelle eine detaillierte Beschreibung entfallen kann. So unterscheidet sich die in Fig. 9b gezeigte Strahleinheit 220 von der in Fig. 9a gezeigten im Wesentlichen darin, dass nunmehr anstelle eines Luftspalts zwischen der Quelle bzw. dem OLED-Substrat 240 und dem Strahlformer 100 ein indexangepasster Klebstoff 360 als indexangepasstes Kontaktmaterial anstelle des Luftspalts zwischen dem Strahlformer 100 und dem OLED-Substrat 240 der Flächenlichtquelle 250 eingebracht ist.

Im Hinblick auf die Frage, ob im Falle einer konkreten Implementierung einer Strahlereinheit 220 eine Berücksichtigung eines Luftspalts 350 gegenüber der Verwendung von brechungsindexangepasster Kontaktmaterialien ggf. zu besseren, also gewünschteren Resultaten führen kann, sind sich hieraus ergebende physikalische Implikationen ggf. zu berücksichtigen. Wie bereits oben erläutert wurde, gibt es verschiedene Möglichkeiten für das Aufbringen des Strahlformers 100 aufeine entsprechenden Flächenlichtquelle 250 bzw. das zugehörige Substrat 240.

Im Falle des direkten Aufbringens des Strahlformers 100 auf die Flächenlichtquelle, wobei ein Luftspalt zwischen der Quelle und dem Strahlformer besteht, ergibt sich für das in den Strahlformer eindringende Licht gemäß des Brechungsgesetzes eine maximale Winkeldivergenz von

$$\Theta_{div} = \arcsin\left(\frac{1}{n_{strahl}}\right) \qquad (4)$$

aufweisen, wobei $n_{strahl}$ der Brechungsindex des Strahlformermaterials ist. Durch die beschränkte Winkeldivergenz, die darauf zurückzuführen ist, dass in dem Brechungsgesetz der Sinus einen betragsmäßig maximalen Wert von 1 annehmen kann, wird vergleichsweise wenig Licht in Abhängigkeit von der Dicke der Abstandsschicht 330 in die Nachbarkanäle gelangen, so dass typischerweise vergleichsweise wenig Störlicht entstehen wird.

In Anbetracht der Tatsache, dass keine Auskoppeloptik auf der Flächenlichtquelle 250 (z.B. der Substratstruktur 240 der in Fig. 9a gezeigten organischen Leuchtdiode) vorhanden ist, kann nur das Licht ausgenutzt werden, welches ohne Auskoppeloptik die Flächenlichtquelle verlässt. Dies könnte zu einer Verringerung der nutzbaren Lichtmenge führen. Allerdings ist die Reflektivität einer Flächenlichtquelle ohne Auskoppeloptik häufig größer als mit einer solchen Auskoppelstruktur, so dass ein effektiver "Recycling-Prozess" in Folge von Mehrfachreflexionen des Lichts zwischen Strahlformer und Flächenlichtquelle ggf. ausgleichend wirken könnte.

Im Vergleich zu der in Fig. 4 dargestellten Situation, bei der der Strahlformer 100 auf die Flächenlichtquelle mit einer zusätzlichen Auskoppeloptik, z.B. einem Pyramidenarray, aufgebracht ist, wobei sich ein Luftspalt zwischen der Auskoppeloptik 260 und dem Strahlformer 100 ausbildet, unterscheidet sich im Hinblick auf die oben diskutierte Situation in Fig. 9a hinsichtlich der maximalen Winkeldivergenz des Lichtes gemäß Gleichung (4) nicht. Es entsteht folglich auch in dieser Situation relativ wenig Störlicht. Durch die zusätzliche Auskoppeloptik 260 wird jedoch mehr Licht aus der Flächenlichtquelle 250 extrahiert, wobei jedoch im Vergleich zu der oben beschriebenen Variante der Licht-Recycling-Prozess weniger effizient ausfallen dürfte.

In dem Fall, wie er in Fig. 9b dargestellt ist, bei dem also der Strahlformer 100 indexangepasst auf eine Flächenlichtquelle derart aufgebracht wird, dass kein Luftspalt zwischen Quelle und Strahlformer besteht, wirkt der Strahlformer 100 sowohl als strahlformendes als auch als auskoppelndes Element. Wird also beispielsweise der Strahlformer 100 auf das OLED-Substrat 240 mit Hilfe des indexangepassten Klebstoffs 360 aufgebracht, kann der Strahlformer 100 ggf. einen größeren Anteils des Licht der Flächenlichtquelle nutzen. Allerdings wird aufgrund des nun nicht mehr durch Gleichung (4) nicht mehr beschränkte Divergenzwinkel der Strahlen dem Strahlformer dazu führen, dass mehr Störlicht beim Hindurchtreten von Strahlen durch die Nachbarlinsen entstehen kann.

Anders ausgedrückt, kann aufgrund des nunmehr ggf. größeren Divergenzwinkels Licht, das durch eine intensitätsmodulierende Struktur 125 tritt auf ein refraktives Element 130 eines mittelbar oder unmittelbar benachbarten Strahlformungselements 110 treffen.

Die Auswahl einer der oben genannten Varianten hängt hierbei von vielen Parametern ab, die letztendlich von den konkreten Anwendungsanforderungen abhängig sind.

Eine weitere Option besteht in der Implementierung einer Randverspiegelung. In Analogie zu einer vollständig reflektierenden Hausung kann sowohl der Strahlformer 100 als auch die Flächenlichtquelle 250 bzw. das zugehörige Substrat 240 an den Rändern verspiegelt werden.

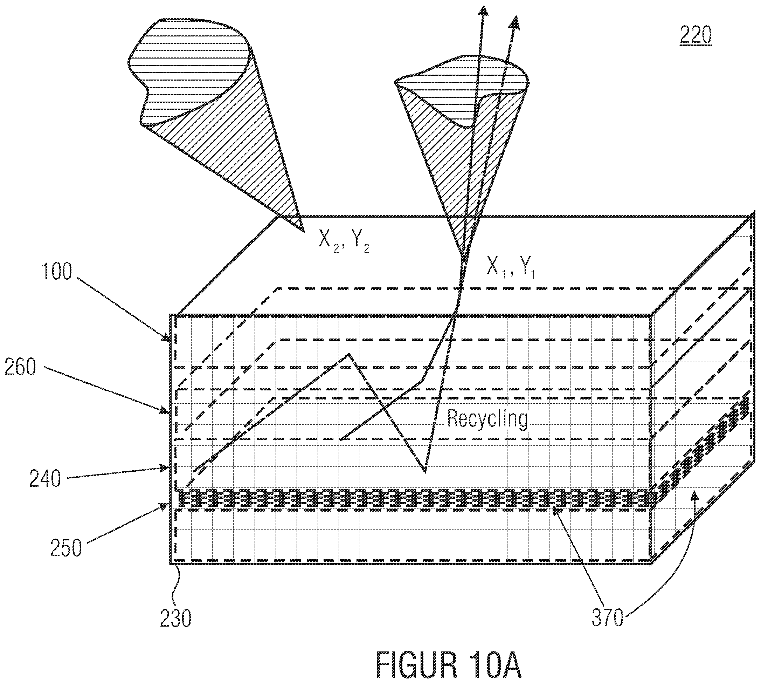

Fig. 10a zeigt so eine Ausführungsform einer Strahleinheit 220 mit einem Strahlformer 100 gemäß einem Ausführungsbeispiel der vorliegenden Erfindung, das eine entsprechende Randverspiegelung aufweist. Die Strahleinheit 220 aus Fig. 10a entspricht im Wesentlichen der in Fig. 4 gezeigten Strahleinheit, wobei jedoch Seitenwände der Strahleinheit 220 mit Hilfe einer Randverspiegelungsschicht 370 beschichtet sind. Hierdurch werden Strahlen, die ohne Randverspiegelungsschichten 370 die Strahleinheit 220 seitlich verlassen würden, zurück in das Innere der Strahleinheit 220 reflektiert, was zu einer erhöhten Lichtauskopplung über den Strahlformer 100 führen kann.

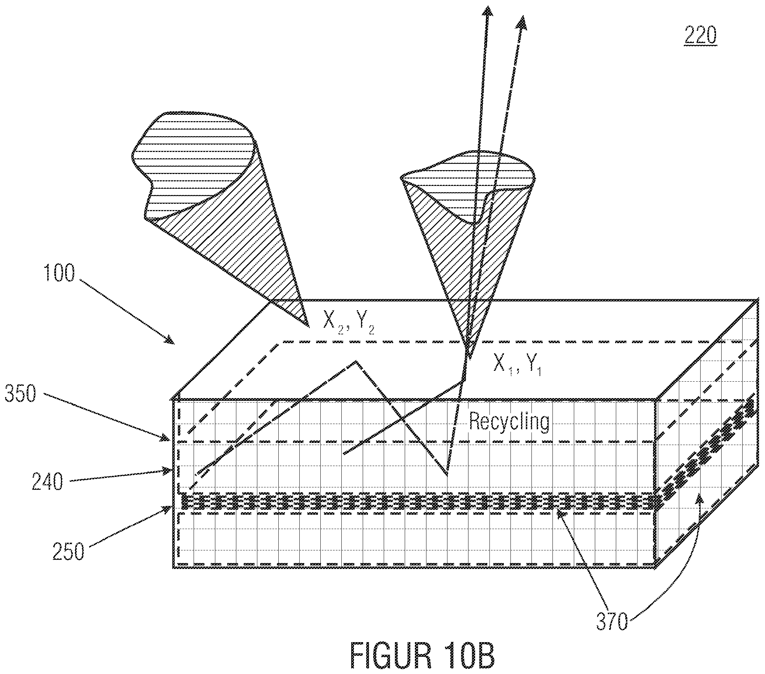

Fig. 10b zeigt eine weitere Ausführungsform einer Strahleinheit 220 mit einem Strahlformer 100 gemäß einem Ausführungsbeispiel der vorliegenden Erfindung. Bei der in Fig. 10b gezeigten Strahleinheit 220 handelt es sich genauer gesagt um die in Fig. 9a gezeigte Strahleinheit, bei der die Seitenwände mit Randverspielung 370 beschichtet sind. Analog zu der in Fig. 10a gezeigten Strahleinheit 220 besteht somit auch in diesem Fall die Möglichkeit, Licht an einem lateralen Austritt zumindest teilweise zu hindern und das betreffende Licht zurück in die Strahleinheit 220 zu spiegeln.

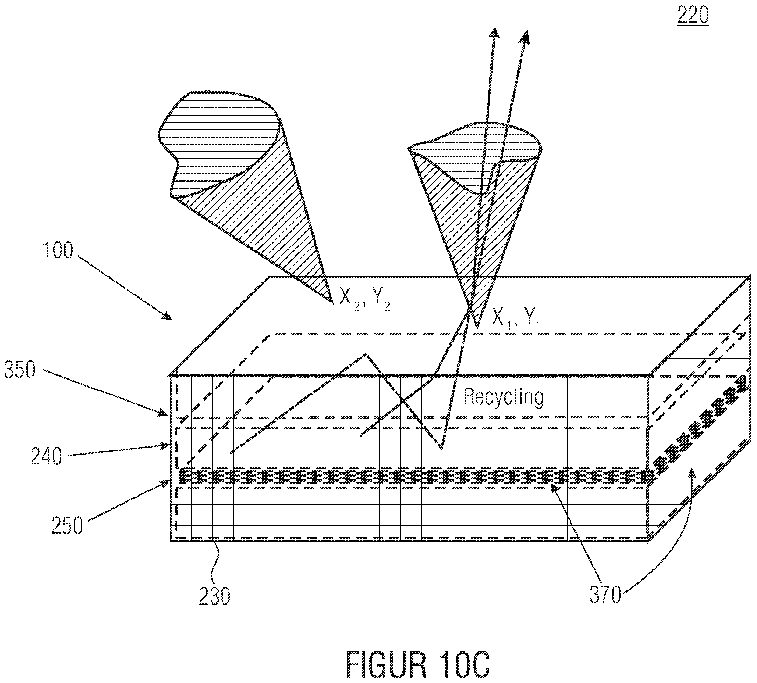

Fig. 10c zeigt eine dritte Ausführungsvariante einer Strahleinheit 220 mit einer entsprechenden Randverspiegelung von Flächenlichtquelle und Strahlformer. Die in Fig. 10c gezeigte Strahleinheit 220 entspricht im Wesentlichen der in Fig. 9b Gezeigten, wobei auch hier wiederum die Seitenwände der Strahleinheit 220 mit einer Randverspiegelungsschicht 370 beschichtet sind. Auch hierdurch wird erneut ein laterales Austreten von Licht bzw. Strahlung wenigstens teilweise verhindert.

Für den Fall, dass der Strahlformer eine gewünschte Intensitätsverteilung im Fernfeld erzeugt, besteht die Möglichkeit, eine Transformation vom Fernfeld ins Nahfeld vorzunehmen. Hierzu kann optional ein weiteres optisches Element, wie beispielsweise ein Linsenarray zur Transformation von Fernfeldverteilungen in Nahfeldverteilungen eingesetzt werden. Eine Nahfeldverteilung unterscheidet sich von einer Fernfeldverteilung dadurch, dass bei der Nahfeldverteilung eine Lichtverteilung in einem vorbestimmten Abstand von der Quelle bzw. dem Strahlformer definiert und erzeugt wird.

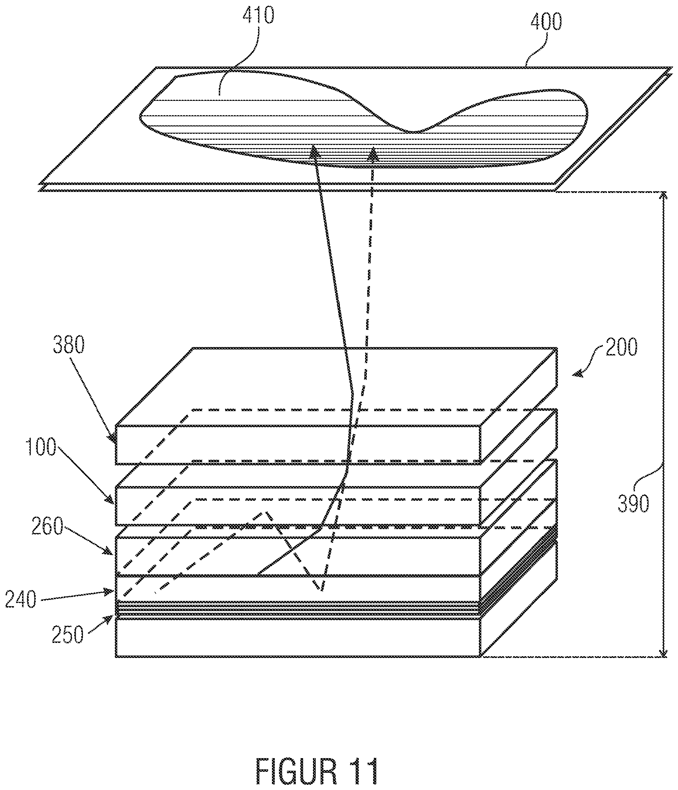

Um dies näher zu illustrieren, ist in Fig. 11 eine Strahleinheit 220 dargestellt, die im Wesentlichen der bereits in Fig. 4 gezeigten Strahleinheit entspricht, jedoch zusätzlich an einer dem OLED-Substrat 240 abgewandten Seite des Strahlformers 100 eine Transformationsoptik 380 aufweist. Die Transformationsoptik 380, die auch als Transformationselement 380 bezeichnet wird, sorgt für die entsprechende Transformation der Abbildung vom Fernfeld in das Nahfeld.

Die Transformationsoptik 380 wird häufig auch als Teil der sogenannten Sekundäroptik bezeichnet, die die eigentliche Abbildung übernimmt. So zählt der Strahlformer 100 gemäß einem Ausführungsbeispiel der vorliegenden Erfindung ebenfalls zu der Sekundäroptik.

Während eine Fernfeldverteilung im Prinzip auf eine Bildebene "fokussiert" ist, die im Unendlichen liegt, wird durch die Transformationsoptik 380 eine Abbildung in eine näherliegende, in einem vorbestimmten Abstand 390 liegende Bildfläche 400 vorgenommen. Hierdurch entsteht in der Bildfläche 400 eine Lichtverteilung 410, wie sie beispielsweise durch den Strahlformer 100 definiert wird. Hierbei kann die Bildfläche grundsätzlich beliebig geformt sein, also auch abschnittsweise unterschiedliche Abstände vom Strahlformer aufweisen. Ein Beispiel einer Bildfläche 400 stellt eine Bildebene dar, wie sie beispielsweise in Fig. 11 dargestellt ist. Gleiches gilt ebenfalls für Beleuchtungsflächen und Beleuchtungsebenen, die auch als Beleuchtungstargets bezeichnet werden.

Die Funktionsweise eines Strahlformers 100 gemäß einem Ausführungsbeispiel der vorliegenden Erfindung sowie von Strahleinheiten 220, die einen entsprechenden Strahlformer 100 aufweisen, kann hinsichtlich ihrer abstrakten Wirkungsweise und ihrer konkreten Wirkungsweise beschrieben werden.

Im Rahmen der Beschreibung der abstrakten Wirkungsweise wird ein Teil des Lichtes, welches von der Lichtquelle abgestrahlt wird, direkt durch die intensitätsmodulierende Struktur 125, beispielsweise in Form einer Blendenöffnung, der einzelnen Strahlformungselemente 110 hindurch gelangen. Der restliche Lichtanteil wird bei ausschließlicher absorbierenden Blenden quasi vollständig absorbiert. Bei reflektierenden Blenden, wobei der reflektierende Blendenanteil typischerweise quellseitig angeordnet ist, wird das restliche Licht durch Mehrfachreflexion zwischen Blende und potentiell reflektierender Quelle oder einer reflektierenden Hausung wenigstens teilweise recycelt, so dass das betreffende Licht die Chance erhält, nach einer Mehrfachreflexion eine Blendenöffnung zu erreichen. Das durch das intensitätsmodulierende Element hindurch tretende Licht wird schließlich durch das anschließende refraktive Element in geeignet Weise modifiziert.

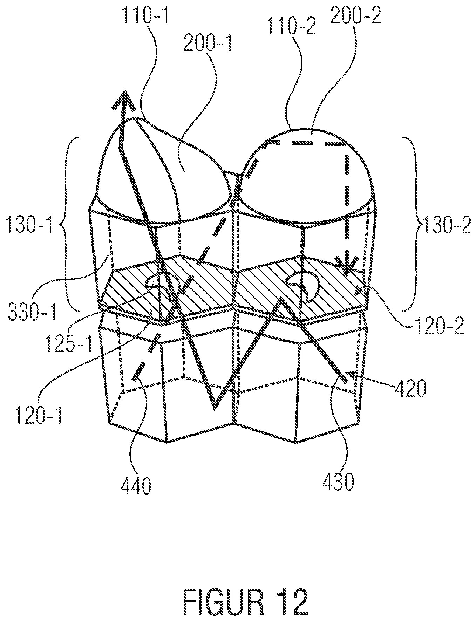

Schematisch ist dies in Fig. 12 dargestellt, die eine Anordnung zweier Strahlformungselemente 110-1, 110-2 unterschiedlicher Typen gemäß einem Ausführungsbeispiel der vorliegenden Erfindung zeigt. Das Strahlformungselement 110-1 weist hierbei ein refraktives Element 130-1 auf, das neben einer Abstandsschicht 330-1 ein optisches Freiform-Element 200-1 umfasst. Im Unterschied hierzu weist das Strahlformelement (Strahlformerkanal) 110-2 ein refraktives Element 130-2 mit einer sphärischen bzw. halbsphärischen Linse 200-2 und einer Abstandsschicht 330-1 auf. Die beiden Abstandsschichten 330-1 und 330-2 können hierbei beispielsweise durch ein gemeinsame Substrat gebildet sein.

Beide Strahlformungselement 110-1, 110-2 umfassen ferner als intensitätsmodulierende Elemente 120-1, 120-2 Blenden auf, die eine den refraktiven Elementen 130 zugewandte absorbierende Blendenschicht und eine den refraktiven Elementen 130 abgewandte reflektierende Blendenschicht aufweisen. Darüber hinaus ist in Fig. 12 ebenfalls für die beiden Strahlformungselemente 110-1, 110-2 entsprechende Ausschnitte einer reflektierenden Flächenlichtquelle 420 gezeigt.

Wird nun von der Lichtquelle 420 ein erster Lichtstrahl 430 emittiert und trifft die Blende 120-2 im Bereich der reflektierenden Schicht, wird dieser zurück zu der reflektierenden Lichtquelle 420 und von dort erneut reflektiert. Hierbei hat der erste Lichtstrahl 430 den Bereich des zweiten Strahlformungselements 110-2 verlassen und ist in den Bereich des ersten Strahlformungselements 110-1 gelangt. Durch die Reflexion an der reflektierenden Lichtquelle 420 im Bereich des ersten Strahlformungselements 110-1 wird der erste Lichtstrahl 430 durch die Blendenöffnung 125-1 auf das refraktive Element 130-1 hin reflektiert. Dort trifft es auf das optische Freiform-Element 200-1 und kann so das erste Strahlformungselement 110-1 verlassen. Der erste Lichtstrahl 430 illustriert somit ein Lichtrecycling durch eine Mehrfachreflexion an der reflektierenden Blende und der reflektierenden Lichtquelle.

Im Unterschied hierzu wird ein zweiter Lichtstrahl 440 von der Lichtquelle 420 emittiert und durchdringt die Blendenöffnung 125-1 der ersten Blende 120-1 unter einem Winkel, so dass der zweite Lichtstrahl 440 den Bereich des ersten Strahlformungselements 110-1 verlässt. Der zweite Lichtstrahl 440 trifft im Folgenden zweimal unter einem Winkel auf eine Oberfläche der zweiten Linse 200-2 des zweiten Strahlformungselements 110-2, so dass dieser in beiden Fällen totalreflektiert wird. Hierdurch wird der zweite Lichtstrahl 440 in Richtung der absorbierenden Blendenschicht der Blende 120-2 reflektiert und von dieser absorbiert. Aufgrund der Tatsache, dass der zweite Lichtstrahl 440 unter einem solchen Winkel die Lichtquelle 420 verlassen hat, dass dieser zwar die Blendenöffnung 125-1 des ersten Strahlformungselements 110-1 passieren konnte, jedoch nicht das optische Freiform-Element 200-1 des betreffenden Strahlformungselements passiert, ist der zweite Lichtstrahl 440 als Störlicht anzusehen. Somit illustriert dieser zweite Lichtstrahl eine mögliche Eliminierung von Störlicht durch die absorbierende Blende.

Im Hinblick auf die abstrakte Wirkungsweise legen die Blendenöffnungen, also die intensitätsmodulierenden Strukturen 125 der intensitätsmodulierenden Elemente 120 in den jeweiligen Kanälen oder Strahlformungselementen 110 in der Blendenaustrittsebene eine räumliche Lichtverteilung fest, da die Blendendicke unter der Voraussetzung der Verwendung typischer Dünnschichtprozesse als hinreichend klein für das Vorliegen einer Blendenebenen angenommen werden können. Durch das nachgeschaltete, refraktive Element 130 wird diese Lichtverteilung in jedem Kanal mit Kanalindizes i, k in eine zugehörige Leistungsdichteverteilung transformiert. Jedem Kanal (i, k) kann also eine winkelabhängige Abstrahlkeule zugeordnet werden, die durch

$$\frac{dP_{i,k}}{d\Omega dA_{i,k}} = B(X_i, Y_k, \Theta, \Phi) \qquad , \qquad (5)$$

wobei $\Delta A_{i,k}$ die jeweilige Kanalfläche darstellt. Somit kann in weiten Grenzen eine quasi beliebige, diskretisierte Abstrahlcharakteristik nach dem Strahlformer erzeugt werden. Lediglich der Vollständigkeit halber sollte erwähnt werden, dass Gleichung (5) eine orthogonale Anordnung von Kanälen 110 zu Grunde liegt. Im Falle einer allgemeinen Verteilung hängen die X- und Y-Koordinaten der Kanäle beide sowohl von i, als auch von k ab.

Wie bereits im Zusammenhang mit Fig. 12 erläutert wurde, kann das Auftreten von Störlicht durch eine absorptive Blende oder eine absorptive Schicht im Rahmen des intensitätsmodulierenden Elements 120 minimiert bzw. vollständig unterbunden werden. So kann einerseits Licht am refraktiven Element 130 reflektiert bzw. totalreflektiert werden, wie dies in Fig. 12 dargestellt war. Andererseits kann Licht, welches sehr schräg den Strahlformer verlässt, auf refraktive Elemente von Nachbarkanälen treffen und letztlich wieder in den Strahlformer hineingezogen werden. Auch dies ist in Fig. 12 dargestellt. Diese Lichtbeiträge, die zu Störlicht führen können, werden beim Auftreffen auf die absorptive Blende zum größten Teil eliminiert.

Im Hinblick auf die konkrete Wirkungsweise gibt es zwei grundsätzlich verschiedene Typen von Strahlformern gemäß Ausführungsbeispielen der vorliegenden Erfindung. Beim ersten Strahlformungstyp erfolgt eine optische Abbildung der räumlichen Lichtverteilung nach dem intensitätsmodulierenden Element durch das refraktive Element. Dies umfasst einerseits eine Abbildung in eine vorgegebene Beleuchtungsfläche mit einem endlichen Abstand zum Strahlformer. Andererseits ist auch eine Fourier-Abbildung möglich, also eine Transformation der räumlichen Lichtverteilung nach dem intensitätsmodulierenden Element in eine Winkelverteilung und somit in das Fernfeld. Diesen Strahlformertyp nennen wir im Folgenden "(Fourier-) Abbildungs-Strahlformer", um beide Realisierungsmöglichkeiten zu verdeutlichen. Entsprechendes gilt ebenfalls für den zugehörigen Transformationsprozess: "(Fourier-) Abbildungen".

Beim zweiten Strahlformungstyp, dem sogenannten Freiform-Strahlformer, wird als refraktives Element eine Freiform verwendet und es erfolgt in der Regel keine optische Abbildung der räumlichen Lichtverteilung nach dem intensitätsmodulierenden Element. Eine solche kann jedoch optional auch in diesem Fall nachgeschaltet werden.

Bei einem (Fourier-) Abbildungs-Strahlformer 100 ist das refraktive Element 130 im Wesentlichen durch eine konvexe sphärische oder asphärische Linse 200 gegeben, welche auf einer Abstandsschicht 330 aufgebracht ist, die auch als Spacer-Schicht bezeichnet wird. Die Linse 200 bewirkt näherungsweise eine (Fourier-) Abbildung der Blendengeometrie, d.h. es wird die räumliche Lichtverteilung nach der Blendenöffnung, wie sie durch das intensitätsmodulierende Element 120 und die intensitätsmodulierende Struktur 125 gegeben ist, in eine Winkel- oder Intensitätsverteilung transformiert. Anders ausgedrückt, wird beim Fourier-Abbildungs-Strahlformer 100 durch die Linse 200 also die räumliche Lichtverteilung in eine Fernfeldverteilung transformiert. Hingegen wird beim Abbildungs-Strahlformer die räumliche Lichtverteilung nach der intensitätsmodulierenden Struktur in eine Intensitätsverteilung in eine vorgegeben Bildebene bzw. einer allgemeinen Beleuchtungsfläche transformiert. Die Blendengeometrie in jedem Kanal mit den Kanalindizes (i, k) bestimmt somit die Form der Abstrahlkeule gemäß Gleichung (5) .

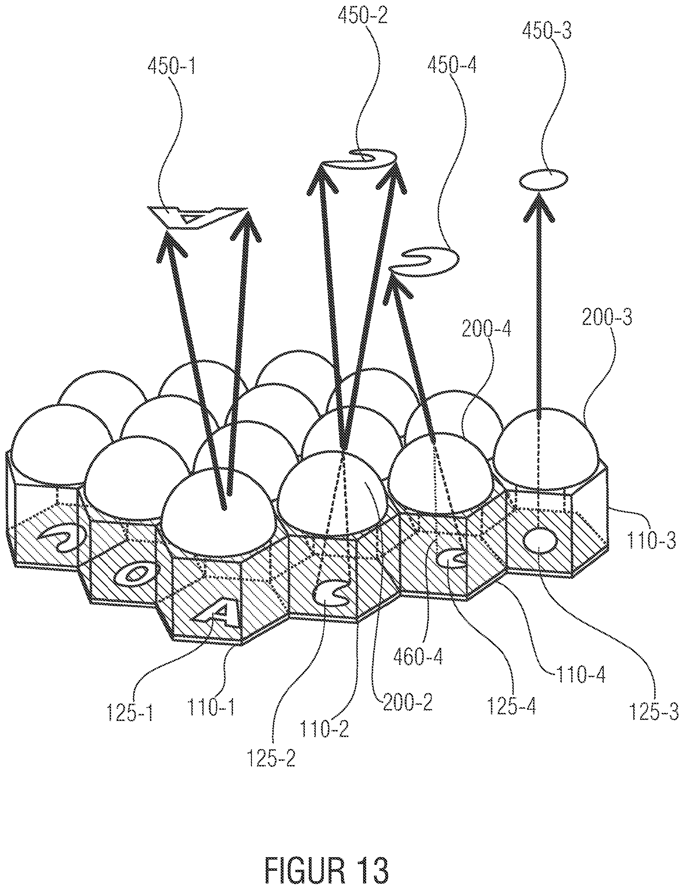

Kreisförmige Blenden ergeben somit kreisförmige Fernfelder, während dreieckige Blenden entsprechende dreieckige Fernfelder ausbilden. Ein entsprechender Versatz der Blende zur optischen Achse des refraktiven Elements 130 resultiert hierbei in einer Ablenkung der Lichtverteilung. Dies ist auch in Fig. 13 näher illustriert.

So zeigt Fig. 13 einen (Fourier-) Abbildungs-Strahlformer 100 gemäß einem Ausführungsbeispiel der vorliegenden Erfindung mit hexagonaler Kanalgeometrie. Jeder Kanal 110 des Strahlformers 100 erzeugt näherungsweise ein (Fourier-) Bild in der Bildebene oder im Fernfeld der Blendenöffnung.

Die Mehrzahl von Strahlformungselementen 110 unterscheidet sich hinsichtlich der intensitätsmodulierenden Elemente 120 in Form der Geometrie der Blenden. So weist das Strahlformungselement 110-1 eine A-förmige Blendenöffnung 125-1 auf, die bei einem entsprechenden Durchtritt des Lichts durch die Blendenöffnung 125-1 in ein entsprechendes Bild 450-1 im Fernfeld abgebildet wird. Entsprechend weist das Strahlformungselement 110-2 eine sichelförmige Blendenöffnung 125-2 auf, die entsprechend durch eine Linse 200-2 in ein entsprechendes Abbild 450-2 im Fernfeld transformiert wird. Analog wird im Falle des Strahlformungselements 110-3 die kreisförmige Blendenöffnung 125-3 durch die Linse 200-3 in ein kreisförmiges Abbild 450-3 transformiert.

Darüber hinaus ist in Fig. 13 im Rahmen des vierten Strahlformungselements 110-4 der Fall gezeigt, dass die Blendenöffnung 125-4, die ebenfalls sichelförmig ist, bezüglich einer optischen Achse 460-4 der Linse 200-4 des entsprechenden Strahlformungselements seitlich versetzt ist. Hierdurch wird das erzeugte Abbild 450-4 der Blendenöffnung 125-4 entsprechend ebenfalls seitlich von einer Verlängerung der optischen Achse weg projiziert.

Die Lichtverteilung oder Lichtleistungsverteilung innerhalb einer Abstrahlkeule oder eines Abstrahlkegels sowie die Steilheit des Intensitätsabfalls außerhalb der Abstrahlkeule werden durch eine Übertragungsfunktion des refraktiven Elements 130 bestimmt. Die Übertragungsfunktion hängt hierbei u.a. von Abbildungsfehlern von Dickenlinsen, Asphärizitäten der Linsen und einer Dicke der Abstandsschicht 330 (Dicke der Spacer-Schicht), dem sogenannten Defokus, ab. Es entsteht somit keine (Fourier-) Abbildung im strengen Sinne, sondern eine durch die Übertragungsfunktion modifizierte (Fourier-) Abbildung, wodurch die Intensitätsverteilung innerhalb der Abstrahlkegel in einem gewissen Umfang gesteuert werden kann. Durch die modifizierte (Fourier-) Abbildung wird nicht nur kanalweise ein Abstrahlkegel gezielt eingestellt, sondern das Licht wird auch in diesem Abstrahlkegel konzentriert. D.h. es kommt zu einer Intensitätserhöhung durch Lichtkonzentration.

Die Dicke der Abstandsschicht 330, also der Spacer-Schicht, sollte für eine relativ scharfe Abbildung der Blende mit einem entsprechenden, steilen Intensitätsabfall so gewählt werden, dass die Blende sich in der Nähe der paraxialen Linsenbrennweite f (Fourier-Abbildungs-Strahlformer) befindet bzw. dass ein Linsen-Blenden-Abstand gemäß des Abbildungsgesetzes eingestellt wird (Abbildungs-Strahlformer). Im Falle von stark divergierenden Licht-Quell-Verteilungen wird hierdurch allerdings ein relativ großer Anteil von Licht, das durch die Blende eines bestimmten Kanals hindurchtritt, in einen Nachbarkanal gelangen. Es entsteht also ein gewisser Betrag an Störlicht.

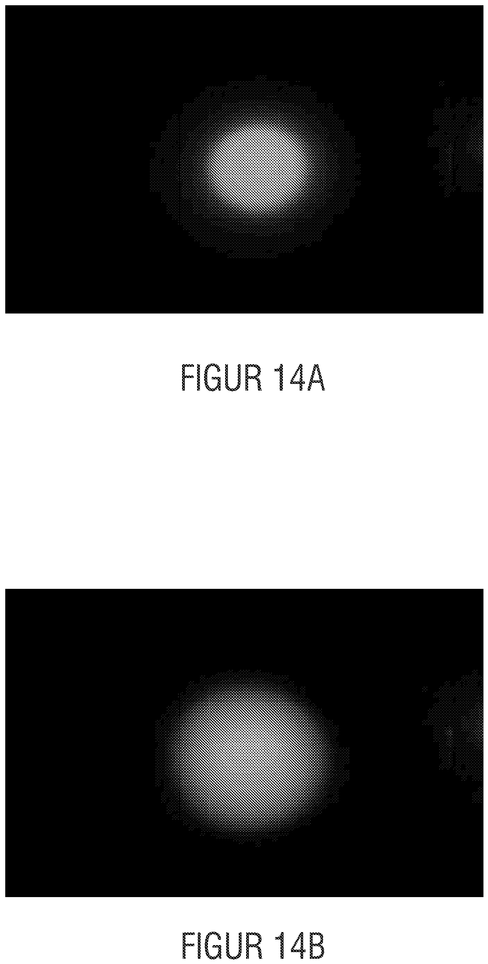

Der Störlichtanteil lässt sich durch verschiedene Maßnahmen minimieren. Beispielsweise kann das Störlicht durch oben beschriebene, absorptive Kanal-Trennwände teilweise unterdrückt werden. Weiterhin lässt sich der Störlichtanteil durch einen geringeren Linsen-Blenden-Abstand bzw. einen geringeren Abstand des refraktiven Elements 130 von dem intensitätsmodulierenden Element 120 verringern. Mit kleinerem Linsen-Blenden-Abstand entsteht eine verstärkte "Verwaschung" der Fernfeldverteilung. Dies ist in Fig. 14 näher illustriert.

Fig. 14a zeigt so das Abbild einer kreisförmigen Lichtverteilung mit Hilfe einer (Fourier-) Abbildung von einer kreisförmigen Blendenstruktur mit einem Blenden-Linsen-Abstand, der das 0.7-fache der paraxialen Brennweite f der betreffenden Linse entspricht. Entsprechend zeigt Fig. 14b ein entsprechendes Abbild bei dem ein Blenden-Linsen-Abstand nur noch das 0.5-fache der paraxialen Brennweite aufweist. Hierbei zeigt Fig. 14b eine deutlich "verwaschenere" Randbegrenzung als dies das Abbild in Fig. 14a zeigt.

Fig. 14 illustriert so, dass durch Variation des Linsen-Blenden-Abstands bzw. des Abstands des refraktiven Elements 130 von dem intensitätsmodulierenden Element 120 der Betrag an Störlicht und an "Verwaschung" der Fernfeldverteilung gezielt steuerbar und an die entsprechenden Anwendungsanforderungen anpassbar ist. Dicken der Abstandsschicht 330 im Bereich von dem etwa 0.4-fachen der paraxialen Brennweite f bis zur paraxialen Brennweite f selbst liefern häufig den Anfordernissen entsprechende Ergebnisse (0.4 x f bis 1 x f).

Linsenparameter (wie z.B. Linsenradien) folgen in der Regel aus allgemein bekannten Designvorschriften (Abbildungsmaßstab / Abberationen) für (Fourier-) Abbildungen. Dies gilt im Besonderen für Lichtquell-Verteilung mit nicht allzu großer Divergenz. Für Lichtquellverteilungen mit großer Strahlwinkeldivergenz bietet es sich an, Linsen mit kleinen Brennweiten zu verwenden, um eine gute Störlichtminimierung zu erreichen. Für einige Fälle ist es sogar vorteilhaft, falls der Linsenradius R und ein typischer Kanaldurchmesser P in folgender Relation zueinander stehen:

$$R \approx P / 2 \qquad\qquad (6)$$

Dies bedeutet, dass Linsen mit einer annähernd halbkugelförmigen Struktur bei einigen Anwendungen zu favorisieren sind. Hierdurch kann ggf. erreicht werden, dass ein möglichst geringer Anteil von Licht in die Nachbarkanäle gelangt, sehr schräge Strahlen und damit ein gewisser Anteil von Licht der Nachbarkanäle durch Totalreflexion im Strahlformer verbleibt und durch die optionale, absorptive Blende eliminiert wird, und sehr schräge Störlichtstrahlen effektiv in den Strahlformer wieder hineingezogen werden.

Durch den Einsatz von quellseitig reflektierenden Blenden bzw. quellseitig reflektierenden intensitätsmodulierenden Strukturen und Elementen besteht darüber hinaus die Möglichkeit, eine Intensitätsüberhöhung zu erhalten. Werden im Unterschied ausschließlich absorbierende Blenden bzw. entsprechende absorbierende intensitätsmodulierende Elemente eingesetzt, wird zwar das durch die Blenden hindurchtretende und divergente Licht durch die refraktive Struktur in den zugehörigen Akzeptanzwinkelbereich bzw. Abstrahlkegel transferiert. Es wird jedoch eine unerhebliche Lichtleistung in Folge der Absorption nicht zur Bildgebung verwendet. Anders ausgedrückt, existiert eine Winkeldivergenz der Lichtkonzentration, so dass Lichtleistung in der Größenordnung von $(1-A_{arp}/A_{cha})$ in Folge der Absorption auftritt, wobei $A_{arp}$ eine Fläche der Blendenöffnung darstellt und $A_{cha}$ eine Größe des Kanals bzw. des strahlformenden Elements 110 darstellt.

Durch die Verwendung von quellseitig reflektierenden Blenden und reflektierenden Flächenlichtquellen oder auch Quellen in reflektierenden Hausungen wird zumindest ein Teil dieses Lichtes durch Mehrfachreflexion recycelt. Damit wird eine Intensitätserhöhung durch das Zusammenspiel von zwei Effekten erreicht, dem Lichtrecycling und der winkelmäßigen Lichtkonzentration durch das refraktive Element.

Neben Leistungsverlusten durch nicht perfekte Reflexion beim Recyclingprozess, also durch Reflexionswerte von weniger als 1 (R < 1), kann zusätzlich Licht durch die Ränder des Strahlformers und der Flächenlichtquelle, also beispielsweise durch den Rand von Substraten von organischen Leuchtdioden, in ungewollte Richtungen verloren gehen. Solche Leistungsverluste können für Flächenlichtquelle mit relativ kleinen Flächen durchaus beträchtliche Werte annehmen.

Für eine quadratische Flächenlichtquelle mit einer Seitenlänge L und einer gemeinsamen Höhe H des Strahlformers und der Flächenlichtquelle kann so bei jeder Reflexion ein Randverlust in der Größenordnung von ungefähr 2 H/L vorliegen. Um solche Verluste zu minimieren, können Randverspiegelungen des Strahlformers und/oder von Flächenlichtquellen durchaus sinnvoll sein, wie dies bereits zuvor im Zusammenhang mit Fig. 10a bis 10c erläutert wurde. Anders ausgedrückt kann hier in Analogie zu einer vollständig reflektierenden Hausung eine Randverspiegelung des Strahlformers und/oder der Lichtquelle entgegenwirken.

Darüber hinaus besteht die Möglichkeit die Geometrien in weiten Bereichen frei zu skalieren. Bei Veränderung aller Geometrieparameter, also Linsenradien, Kanalgrößen, Blendenparameter und anderen entsprechenden Parametern um einen beliebigen, konstanten Faktor bleibt die optische Wirkung des Strahlformers gleich, sofern nicht im Falle einer Verkleinerung die Wellenlänge der betreffenden Strahlung in die Größenordnung der Blendenöffnungen gelangt. Die Geometrieparameter des Strahlformers sind also insgesamt in weiten Grenzen skalierbar. Maximale Dimensionen im Bereich unterhalb eines Millimeters sind häufige wünschenswert, um eine leichte Sichtbarkeit der betreffenden Einzelstrukturen zu ermöglichen.

Im Folgenden werden verschiedenen Einsatzbeispiele beschrieben, bei denen Strahlformer gemäß Ausführungsbeispielen der vorliegenden Erfindung einsetzbar sind. Hierzu zählen u.a. Strahlformung, jedoch auch Beleuchtungen und Signalgebungen.

Als erstes Einsatzbeispiel besteht beispielsweise die Möglichkeit, kanalweise angepasste, unterschiedliche Abstrahlkegel der einzelnen Strahlformungselemente zu implementieren. Durch ein systematisches Einstellen von unterschiedlichen Parametern und Typen der einzelnen Strahlformungselemente kann so eine kanalweise angepasste Licht-Abstrahlkeule erreicht werden, wie dies beispielsweise bereits in Fig. 13 gezeigt wurde. Hierbei können Variationen der Typen bzw. der den Kanälen zugrunde liegenden Parameter von Kanal zu Kanal erfolgen. Ebenso können die Parameter zufällig oder systematisch um einen bestimmten Wert variiert werden (kanalweiser Parameterchirp) oder durch entsprechende Variationen bezüglich unterschiedlicher Bereiche implementiert werden. Hierdurch ist somit sowohl eine kanalweise Einstellung der Formen der Abstrahlkeulen als auch eine kanalweise Einstellung der Lichtablenkungen erreichbar. Bei der Verwendung von gleichen Kanalgeometrien ermöglicht die kanalweise Diskretisierung der Lichtverteilung ein Fernfeldmuster, das nahezu unabhängig von der räumlichen Intensitätsverteilung der Quelle ist. Dies kann ggf. jedoch voraussetzen, dass die einzelnen Kanaldimensionen kleiner sind als typische Längen für örtliche Intensitätsänderungen der Quellverteilung.

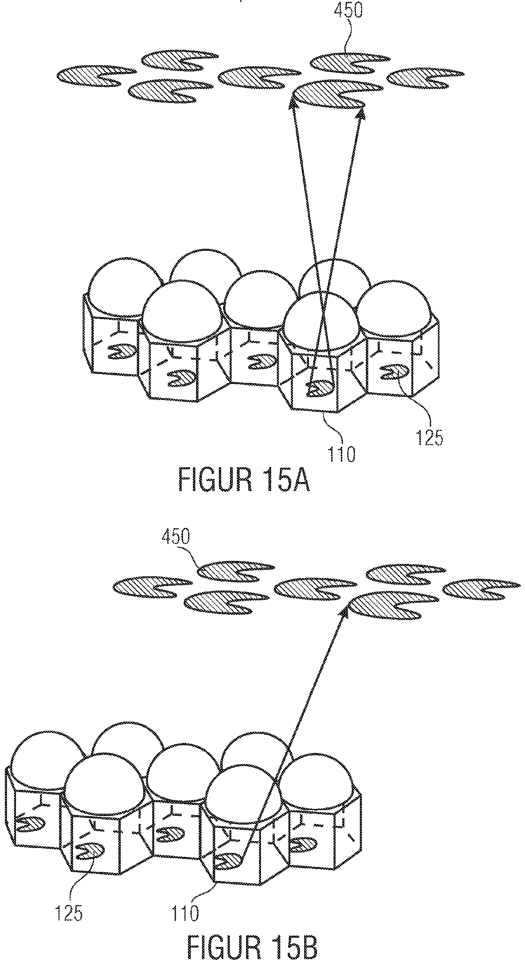

Wie bereits im Zusammenhang mit Fig. 13 und dem dort gezeigten Strahlformungselement 110-4 erläutert wurde, besteht die Möglichkeit, durch einen Versatz der Blende gegenüber der optischen Achse der refraktiven Linsen sowohl ein Strahlformung als auch eine Lichtablenkung zu erreichen. Fig. 15a und 15b illustrieren dies für unterschiedliche Teilbereiche eines Strahlformers 100 gemäß einem Ausführungsbeispiel der vorliegenden Erfindung.

So zeigt Fig. 15a eine Mehrzahl von Strahlformungselementen 110 eines ersten Typs, während Fig. 15b entsprechende Strahlformungselemente 110 eines zweiten Typs zeigt. Beide Typen unterscheiden sich darin, dass die Blendenöffnungen 125 der Strahlformungselemente 110 des zweiten Typs in Fig. 15b gegenüber einer in Fig. 15a und b nicht eingezeichneten optischen Achse verschoben sind. Hierdurch kommt es zu einem gemeinsamen Versatz der Abbildungen 450 bei den Strahlformungselementen 910 des zweiten Typs (Fig. 15b) im Vergleich zu dem ersten Typ (Fig. 15a).

Anders ausgedrückt illustrieren die beiden Teilabbildungen 15a und 15b den Effekt einer kombinierten Lichtablenkung und Strahlformung durch einen Versatz der Blendenöffnungen 125 zu einer in den Figuren nicht eingezeichneten optischen Achse der Linsen in jedem Kanal. Die Strahlkegel der einzelnen Kanäle überdecken sich im Fernfeld zum Fernbild, wobei in Teilabbildung a eine Abstrahlung senkrecht zum Strahlformer durch eine Linsen-Blenden-Zentrierung erfolgt, während in Teilabbildung b eine Abstrahlung schräg zum Strahlformer durch einen Linsen-Blenden-Versatz erfolgt.

Durch den konstanten Versatz der Blenden gegenüber der optischen Achse der refraktiven Linsen wird also eine Strahlformung und eine effektive Lichtablenkung erreicht. Bei einem Linsen-Blenden-Versatz wird dabei mehr Licht in den Nachbarkanal gelangen als bei einer Linsen-Blenden-Zentrierung. Daher kann es ggf. von größerer Bedeutung sein, bei der Lichtablenkung absorbierende Blenden zum Einsatz zu bringen, um die Störlichtgeneration zu minimieren. Die Lichtablenkung mit solchen Strahlformern ist im Vergleich zu Lichtablenkungen mit herkömmlichen Prismenarrays als Auskoppelstrukturen im Allgemeinen sowohl effizienter als auch mit weniger Störlicht verbunden.

Im Rahmen eines weiteren Einsatzbeispiels können Strahlformer gemäß einem Ausführungsbeispiel der vorliegenden Erfindung auch zu einer Kombination von Strahlformungen und Lichtkonzentration in einer endlichen Bildebene verwendet werden. Durch eine gezielte Parametervariation oder Parameterchirp besteht die Möglichkeit, nicht nur eine Lichtkonzentration in die einzelnen Abstrahlkegel zu erreichen, sondern es können die Abstrahlkegel der einzelnen Kanäle in einem definierten Abstand in Überdeckung gebracht werden.

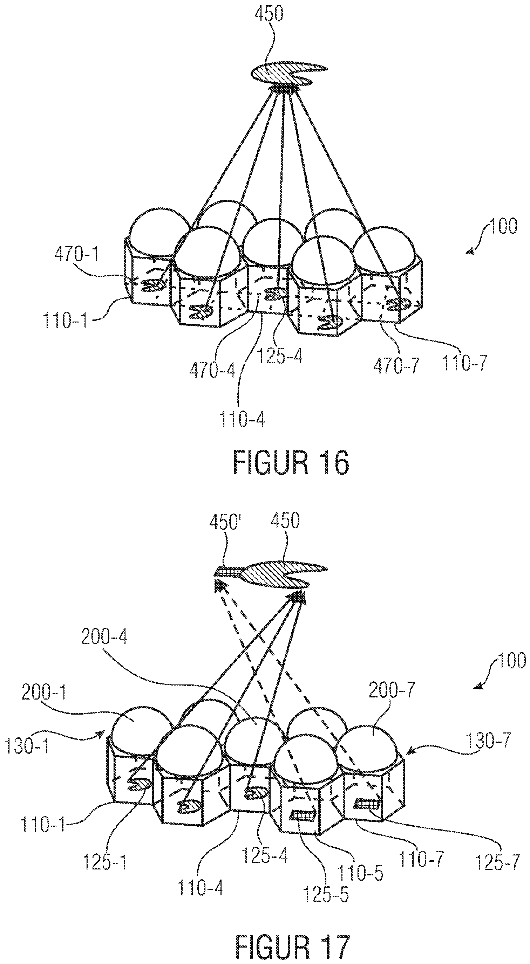

Fig. 16 zeigt einen entsprechenden Strahlformer, bei dem zur Vereinfachung der Darstellung lediglich sieben Strahlformungselemente 110-1 bis 110-7 dargestellt sind. Die sieben Strahlformungselemente 110-1 bis 110-7 gehören sieben unterschiedlichen Typen an, die sich durch eine Variation oder einen Chirp des Linsen-Blenden-Versatzes unterscheiden.

Um dies näher zu erläutern, ist in Fig. 16 zu jedem der sieben dargestellten Strahlformungselemente 110 eine Projektion der optischen Achse oder ein Durchstoßpunkt der optischen Achse in die Ebene der Blende durch ein Fadenkreuz 470-1 bis 470-7 dargestellt. So liegt etwas eine Blendenöffnung 125-4 des Strahlformungselements 110-4 zentral zu einem Mittelpunkt des Fadenkreuzes 470-4, während mit zunehmenden räumlichen Abstand von der Lage des vierten Strahlformungselements 110-4 ein Abstand der betreffenden Blendenöffnung 125 von dem zentralen Punkt des zugehörigen Fadenkreuzes 470 zunimmt.

Fig. 16 illustriert somit, dass eine Konzentration aller Lichtkegel auf das gleiche Gebiet einer vorgegebenen Bildebene möglich ist, in der ein gemeinsames Abbild 450 aller Strahlformungselemente 110 liegt. Die gezielte Variation der Lage der Blendenöffnungen 125 innerhalb der Kanäle 110, die letztendlich zu der Überdeckung der einzelnen Lichtverteilungen in einem vorgegebenen Abstand zum Strahlformer 100 führt, kann durch einen optional wenigstens bereichsweise stetigen, differenzierbaren oder stetig differenzierbaren funktionalen Zusammenhang (Funktion) beschrieben werden, in die eine Information einer Lage des betreffenden Strahlformungselements 110 eingeht. Im Fall des Strahlformers 100, wie er in Fig. 16 gezeigt ist, ergibt sich eine solche Funktion aus den Linsenabbildungsgesetzen, die für die einzelnen Strahlformungselemente 110 gelten, wobei ggf. Korrekturen durch Linsenfehler oder andere Effekte berücksichtigt werden.

Ein weiteres Einsatzbeispiel, das dem in Fig. 16 gezeigten sehr ähnlich ist, wird im Folgenden im Zusammenhang mit Fig. 17 beschrieben. Hierbei handelt es sich um die Erzeugung einer Fern- oder Nahfeldverteilung durch Überlagerung verschiedener Abstrahlkegel. Durch die Überlagerung von verschiedenen Formen und/oder Größen von Lichtkegeln von unterschiedlichen Strahlformungselementen im Fernfeld bzw. in einer gewissen Bildebene, können komplizierte Lichtverteilungen systematisch erzeugt werden.

So zeigt Fig. 17 einen Strahlformer 100 mit sieben Strahlformungselementen 110-1 bis 110-7, die unterschiedlichen Typen angehören. Die Strahlformungselemente 110-1 bis 110-4 unterscheiden sich voneinander im Wesentlichen durch eine Lage der zugehörigen Blendenöffnungen 125-1 bis 125-4 zu den refraktiven Elementen 130-1 bis 130-4 bzw. den entsprechenden Linsen 200-1 bis 200-4. Ähnlich zu dem Aufbau des Strahlformers 100, wie er in Fig. 16 gezeigt ist, sind hierbei die Abstände derart variiert, dass die Strahlen der unterschiedlichen Strahlformungselemente 110 sich in einem gemeinsamen Punkt in einer Bildebene in einem endlichen Abstand treffen und dort ein der Blendenformen 125 entsprechendes Abbild bzw. Teilabbild 450 erzeugen.

Darüber hinaus weist der Strahlformer 100 jedoch weitere Strahlformungselemente 110-5 bis 110-7 auf, die sich untereinander ebenfalls hinsichtlich der Lage der Blendenöffnungen 125 zu denen der refraktiven Elemente 130 unterscheiden. Darüber hinaus unterscheiden sich die Typen dieser Untergruppe von Strahlformungselementen 110 auch hinsichtlich der Form der Blendenöffnungen 125. Während die Strahlformungselemente 125-1 bis 125-4 sichelförmig sind und daher ein entsprechendes sichelförmiges Abbild 450 erzeugen, weisen die Blendenöffnungen 125-5 bis 125-7 eine rechteckige Form auf. Entsprechend ergibt sich in der Bildebene eine zweite Teilabbildung 450', die eine Abbildung der entsprechenden Blendenöffnungen 125 darstellt.

Der in Fig. 17 dargestellte Strahlformer 100 gemäß einem Ausführungsbeispiel der vorliegenden Erfindung ermöglicht daher eine komplizierte, im Grunde beliebige Bildberandung mit Intensitätsverläufen, die durch eine Überlagerung von Lichtverteilungen der unterschiedlichen Strahlformerkanäle 110 sowohl im Fernfeld als auch in einer endlichen Bildebene erzeugt werden können. Darüber hinaus besteht selbstverständlich ebenfalls die Möglichkeit, unterschiedliche Strahlformungselemente 110 auf unterschiedliche Bildebenen zu fokussieren. So können beispielsweise im Rahmen eines Strahlformers 100 gemäß einem Ausführungsbeispiel der vorliegenden Erfindung Gruppen von Strahlformungselementen, die ihrerseits jeweils ggf. unterschiedliche Typen von Strahlformungselementen aufweisen, Abbildungen in unterschiedlichen Bildebenen erzeugen.

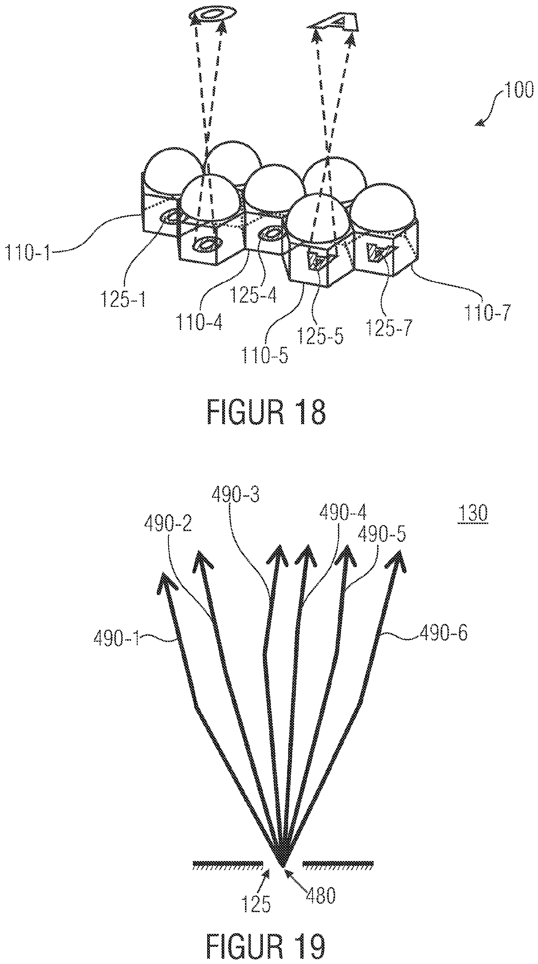

Ein weiteres Einsatzbeispiel eines Strahlformers gemäß einem Ausführungsbeispiel der vorliegenden Erfindung ist im Zusammenhang mit Fig. 18 dargestellt. Hierbei handelt es sich um die Erzeugung einer Lichtverteilung durch unterschiedliche Bereiche identischer Kanäle, was beispielsweise zu Erzeugung eines Schriftzugs verwendet werden kann. Ein Strahlformer 100 gemäß einem Ausführungsbeispiel der vorliegenden Erfindung, wie er in Fig. 18 gezeigt ist, kann daher Bereiche von identischen Kanälen oder Strahlformungselementen 110 aufweisen, wobei die unterschiedlichen Bereiche verschiedene Lichtverteilungen mit ggf. verschiedenen Formen und/oder verschiedenen Ablenkungen erzeugen. So umfasst der in Fig. 18 gezeigte Strahlformer 100 wiederum sieben Strahlformungselemente 110-1 bis 110-7, von denen die Strahlformungselemente 110-1 bis 110-4 einem ersten Typ angehören, während die Strahlformungselemente 110-5 bis 110-7 einem zweiten Typ angehören. Die beiden Typen unterscheiden sich hinsichtlich der Form der Blendenöffnungen 125-1 bis 125-7. Während die Blendenöffnungen 125-1 bis 125-4 eine O-förmige Form aufweisen, weisen die Blendenöffnungen 125-5 bis 125-7 A-förmige Blendenöffnungen 125 auf. Entsprechend erzeugen die erste Gruppe von Strahlformungselementen 110 im Fernfeld ein "O", während die zweite Gruppe von Strahlformungselementen 110 im Fernfeld ein "A" erzeugen.

Hierdurch ist es beispielsweise möglich, Schriftzüge im Fernfeld oder in einer Bildebene durch entsprechende Variation des Versatzes der Positionen der Blendenöffnungen bezüglich des refraktiven Elements 130 mit Hilfe einer flächenhaften Lichtquelle zu erzeugen. Selbstverständlich ist auch dieses Ausführungsbeispiel eines Strahlformers 100 nicht auf die Erzeugung von Schriftzügen im Fernfeld oder einer vorgegebenen Bildebene beschränkt. Es können vielmehr auch andere komplexe Darstellungen wie beispielsweise Logos oder Bilder erzeugt werden.

Neben den zuvor erläuterten (Fourier-) Abbildungs-Strahlformern können Strahlformer gemäß Ausführungsbeispielen der vorliegenden Erfindung auch in Form von Freiform-Strahlformern implementiert werden, wie dies zuvor erläutert wurde. Bei diesen weisen die refraktiven Elemente wenigstens teilweise entsprechende Freiformenanteile auf.

Anders ausgedrückt ist im Gegensatz zum (Fourier-) Abbildungs-Strahlformer das refraktive Element wenigstens eines Strahlformungselements auf Basis einer Freiform implementiert. Somit erzeugt das refraktive Element des Strahlformungselements im Gegensatz zum (Fourier-) Abbildungs-Strahlformer keine approximative (Fourier-) Abbildung der Lichtverteilung nach der Blendenöffnung. Beim (Fourier-) Abbildungs-Strahlformer wird hauptsächlich die Form der Berandung und/oder die Ablenkung des Abstrahlkegels jedes Kanals durch (Fourier-) Abbildung gezielt gesteuert. Diese Steuerung der Intensitätsverteilung innerhalb des Abstrahlkegels ist zwar in einem gewissen Umfang möglich durch Modifikation durch Asphärizität und Defokus, allerdings sind mit Freiformen deutlich beliebigere Verteilungen im Abstrahlkegel erzielbar.

So ist es unter Ausnutzung einer Freiform beispielsweise möglich, einen Punkt der Blendenöffnung in eine vollständig beliebige Intensitätsverteilung zu überführen. Dies gilt sowohl für das Fernfeld als auch für beliebige Beleuchtungsflächen, die auch als Beleuchtungstargets bezeichnet werden. Die Gesamtverteilung eines Kanals ergibt sich dann aus der Überlagerung der Intensitätsmuster aller Punkte in der Blendenöffnung.

Um dies näher zu erläutern, ist in Fig. 19 ein refraktives Element 130 auf Basis einer Freiform dargestellt. Ausgehend von einem Punkt 480 in der Blendenöffnung 125 illustriert Fig. 19 anhand von sechs Strahlen 490-1 bis 490-6 die Möglichkeit, aus diesem einem Punkt 480 einen in weiten Bereichen frei designbaren Abstrahlkegel zu erzeugen.

Die Wirkungsweise eines solchen Freiformstrahlformers beruht somit insbesondere auf der freien Designbarkeit entsprechender optischer Freiform-Elemente. Je nach beabsichtigter Strukturgröße können hierbei unterschiedliche Herstellungstechniken zum Einsatz kommen. So ist es beispielsweise möglich, Freiformstrahlerformen im Bereich von 10 µm bis hin zu einigen 100 µm mit Hilfe der Laserlithographie oder sogar der UltraPräzisionsbearbeitung herzustellen. Auch ist die Herstellung entsprechender Freiformstrahler mit Hilfe der sogenannten Graustufen-Elektronenstrahlenlithographie möglich. Im Falle größerer Strukturen (typischerweise ab 50 pm) kann zur Mastererzeugung die Ultrapräzisionsbearbeitung eingesetzt werden. Replikationen sind durch die oben angeführten Replikationestechniken, wie etwa UV-Abformung, Heissprägen, Spritzgießen und anderen Verfahren möglich. In den zuvor beschriebenen Ausführungsbeispielen auf Basis von (Fourier-) Abbildungslinsen können diese im Allgemeinen ebenfalls durch optische Freiformen ersetzt werden. Hierbei ist ggf. lediglich im Hinblick auf den Sprachgebrauch zu achten, da aufgrund der geringen bzw. fehlenden Symmetrie der Freiformen eine "optische Achse" im engen Sinn in vielen Fällen nicht vorhanden ist. Entsprechend gelten die oben angeführten Punkte und Beschreibungen für (Fourier-) Abbildungs-Strahlformer gemäß Ausführungsbeispielen der vorliegenden Erfindung sinngemäß auch für entsprechende Freiformenstrahlformer gemäß Ausführungsbeispielen der vorliegenden Erfindung.

Zusammenfassend ermöglichen somit Strahlformer gemäß Ausführungsbeispielen der vorliegenden Erfindung eine kompakte und effiziente Erzeugung komplexer Abstrahlcharakteristiken gemäß Gleichung (1) einer leuchtenden Fläche mittels kanalweiser (Fourier-) Abbildung oder Freiformstrahlformung. Die kompakte Bauweise ergibt sich nicht zuletzt dadurch, dass Strahlformer gemäß Ausführungsbeispielen der vorliegenden Erfindung als dünne Elemente auf Basis von Dünnschichttechniken herstellbar sind. Als Lichtquellen können hierbei sowohl Flächenlichtquellen als auch Lichtquellen kleiner Ausdehnung in reflektierenden Hausungen oder Ensembles kleiner Lichtquellen verwendet werden.

Ausführungsbeispielen der vorliegenden Erfindung in Form von Strahlformern ist häufig gemein, dass diese kanalweise eine diskretisierte (Fourier-) Abbildung bzw. eine kanalweise diskretisierte Freiformstrahlformung von Blendenöffnungen nahezu beliebiger Gestalt und Anordnung ermöglichen.

**Bezugszeichenliste**

| | |
|---|---|
| 100 | Strahlformer |
| 110 | Strahlformungselement |
| 120 | intensitätsmodulierendes Element |
| 125 | intensitätsmodulierende Struktur |
| 130 | refraktives Element |
| 140 | Randmarkierung |
| 150 | Mittelpunktmarkierung |

160 Höhenlinien
165 Trennstruktur
170 Substrat
180 Rückseite
190 Vorderseite
200 Linse
210 Substratebene
220 Strahleinheit
230 Abdeckungsstruktur
240 Substrat
250 Schichtstruktur
260 Auskoppelstruktur
270 Richtung
280 Projektion
290 Licht-Abstrahl-Kegel
300 Lichtquellenassemble
310 Lichtquelle
320 Hausung
330 Abstandsschicht
340 weitere Schicht
350 Luftspalt
360 brechungsindexangepasstes Kontaktmaterial
370 Randverspiegelungsschicht
380 Transformationsoptik
390 vorbestimmte Abstand
400 Bildfläche
410 Lichtverteilung
420 reflektive Lichtquelle
430 erster Lichtstrahl
440 zweiter Lichtstrahl
450 Abbildung
460 optische Achse
470 Fadenkreuz
480 Punkt
490 Strahl

**Patentansprüche**

1. Beleuchtungsvorrichtung (220) mit folgenden Merkmalen:

einem an einem gemeinsamen Substrat (170) angeordneten Strahlformer (100) zur Erzeugung eines Abstrahlprofils mit einer Vielzahl von einzelnen, benachbart angeordneten, optischen Strahlformungselementen (110) unterschiedlicher Typen,
wobei die einzelnen Strahlformungselemente (110) jeweils einem Typ einer Mehrzahl unterschiedlicher Typen mit unterschiedlichen optischen Eigenschaften angehören, wobei unterschiedliche Typen von Strahlformungselementen (110) zugeordnete Lichtverteilungen im Fernfeld oder in einer endlichen Bildebene bewirken;
wobei die einzelnen Strahlformungselemente (110) bei gemeinsamer Beleuchtung das Abstrahlprofil des Strahlformers (100) mit einer Überlagerung der den einzelnen Strahlformungselementen (110) zugeordneten Lichtverteilungen im Fernfeld oder in einer endlichen Bildebene bewirken; und
wobei die einzelnen Strahlformungselemente (110) jeweils ein intensitätsmodulierendes Element (120) in Form einer Blende und ein bezüglich eines Strahlengangs der gemeinsamen Beleuchtung nachfolgendes, refraktives Element (130), das dem intensitätsmodulierenden Element (120) zugeordnet ist, aufweisen, um die dem einzelnen Strahlformungselement (110) zugeordnete Lichtverteilung zu erhalten, wobei die jeweilige Blende der intensitätsmodulierenden Elemente (120) einen reflektierenden und/oder absorbierenden Bereich aufweist, welcher die jeweilige Blendenöffnung umschließt, und
einer an einem Substrat (240) angeordneten Lichtquelle (250; 310), die auf einer den refraktiven Elementen (130) der Vielzahl von Strahlformungselementen (110) abgewandten Seite der intensitätsmodulierenden Elemente (120) angeordnet ist, wobei die Lichtquelle (250; 300) eine auf dem Substrat (240) angebrachte Flächenlichtquelle (250) oder eine Lichtquelleneinheit (300) mit einer Mehrzahl von individuellen Lichtquellen (310) aufweist, die auf dem Substrat implementiert sind, und wobei das Substrat (170) des Strahlformers (100) und das Substrat (240) der Lichtquelle (250) parallel zueinander angeordnet sind.

2. Beleuchtungsvorrichtung (220) nach Anspruch 1, bei dem ein erster und ein zweiter Typ der Mehrzahl unterschiedlicher Typen von Strahlformungselementen (110) sich voneinander wenigstens hinsichtlich wenigstens eines der folgenden Merkmale unterscheidet: eine Form oder eine Größe des Strahlformungselements (110), eine Höhe oder ein Abstand des intensitätsmodulierenden Elements (120) von dem refraktiven Element (130), eine Form oder eine Größe einer intensitätsmodulierenden Struktur (125) des jeweiligen intensitätsmodulierenden Elements (120), eine Lage der intensitätsmodulierenden Struktur (125) des intensitätsmodulierenden Elements (120) bezüglich einer Lage des refraktiven Elements (130), einer Ausgestaltung eines Randbereichs (165) zwischen zwei benachbarten Strahlformungselementen (110) und eine Form oder eine Größe des refraktiven Elements (130).

3. Beleuchtungsvorrichtung (220) nach einem der vorhergehenden Ansprüche, bei dem die Strahlformungselemente (110) der Vielzahl von Strahlformungselementen (110) direkt aneinander angrenzen.

4. Beleuchtungsvorrichtung (220) nach einem der vorhergehenden Ansprüche, bei dem die Strahlformungselemente (110) der Vielzahl von Strahlformungselementen (110) wenigstens teilweise eindimensional oder zweidimensional unregelmäßig angeordnet sind.

5. Beleuchtungsvorrichtung (220) nach einem der vorhergehenden Ansprüche, bei dem die intensitätsmodulierenden Elemente (120) der Strahlformungselemente (110) wenigstens eine reflektierende oder absorbierende Schicht, ein reflektierendes oder absorbierendes Schichtsystem oder ein reflektierendes oder absorbierendes strukturiertes Schichtsystem aufweisen.

6. Beleuchtungsvorrichtung (220) nach Anspruch 5, bei dem die intensitätsmodulierenden Elemente (120) eine reflektierende Schicht, ein reflektierendes Schichtsystem oder ein reflektierendes strukturiertes Schichtsystem und eine absorbierende Schicht, ein absorbierendes Schichtsystem oder ein absorbierendes strukturiertes Schichtsystem aufweisen, wobei die absorbierende Schicht, das absorbierende Schichtsystem oder das absorbierende strukturierte Schichtsystem dem refraktiven Element (130) zugewandt und die reflektierende Schicht, das reflektierende Schichtsystem oder das reflektierende strukturierte Schichtsystem dem refraktiven Element (130) abgewandt ist.

7. Beleuchtungsvorrichtung (220) nach einem der vorhergehenden Ansprüche, bei dem die refraktiven Elemente (130) ferner eine dem intensitätsmodulierenden Element (120) zugewandte Abstandsschicht (330) aufweisen.

8. Beleuchtungsvorrichtung (220) nach einem der vorhergehenden Ansprüche, bei dem die Strahlformungselemente (110) wenigstens Teile eines gemeinsamen Substrats (170) des Strahlformers (100) umfassen.

9. Beleuchtungsvorrichtung (220) nach einem der vorhergehenden Ansprüche, bei dem ein Strahlformungselement (110) der Vielzahl von Strahlformungselementen (110) von einem unmittelbar benachbarten Strahlformungselement (110) durch eine Trennstruktur (165) getrennt ist.

10. Beleuchtungsvorrichtung (220) nach Anspruch 9, bei dem die Trennstruktur (165) eine reflektierende oder absorbierende Trennschicht zwischen benachbarten Strahlformungselementen (110) umfasst.

11. Beleuchtungsvorrichtung (220) nach Anspruch 10, bei dem die reflektierende Trennschicht als Randverspiegelung zur optischen Isolierung benachbarter Strahlformungselemente (110) ausgebildet ist.

12. Beleuchtungsvorrichtung (220) nach einem der vorhergehenden Ansprüche, bei dem die Strahlformungselemente (110) eine zusätzliche transparente Schicht (340) umfassen, die an das intensitätsmodulierende Element (120) an einer dem refraktiven Element (130) abgewandten Seite angrenzt.

13. Beleuchtungsvorrichtung (220) nach einem der vorhergehenden Ansprüche, bei dem das refraktive Element (130) derart ausgebildet ist, dass wenigstens teilweise Strahlen (430), die nicht durch das intensitätsmodulierende Element (120) des Strahlformungselements (110) des refraktiven Elements (130) unmittelbar fallen, zu dem intensitätsmodulierenden Element (120) hin total reflektiert werden.

14. Beleuchtungsvorrichtung (220) nach einem der vorhergehenden Ansprüche, bei dem wenigstens ein Teil der Vielzahl von optischen Strahlformungselementen (110) derart ausgebildet ist, dass verschiedene Strahlen, die verschiedene Strahlformungselemente (110) passieren, sich in einer Bildfläche (400) in einem vorbestimmten Abstand (390) von dem Strahlformer (100) schneiden, um wenigstens einen Teil des Abstrahlprofils in der Bildfläche (400) zu erzeugen.

15. Beleuchtungsvorrichtung (220) nach einem der vorhergehenden Ansprüche, bei dem wenigstens ein Teil der Vielzahl von optischen Strahlformungselementen (110) derart ausgebildet ist, dass verschiedene Strahlen, die verschiedene Strahlformungselemente (110) passieren, den Strahlformer (100) parallel verlassen, um wenigstens einen Teil des Abstrahlprofils in einem Fernfeld zu erzeugen.

16. Beleuchtungsvorrichtung (220) nach einem der vorhergehenden Ansprüche, bei dem die unterschiedlichen optischen Eigenschaften wenigstens eines Teils der Mehrzahl von Typen von Strahlformungselementen (110) eine Abstrahlcharakteristik definieren, wobei in die Abstrahlcharakteristik eine Information bezüglich eines Orts der Strahlformungselemente (110) eingeht.

17. Beleuchtungsvorrichtung nach einem der vorhergehenden Ansprüche, wobei der Strahlformer (100) zwischen der Lichtquelle (250; 300) und dem intensitätsmodulierenden Element (120) einen Luftspalt (350) oder ein brechungsindexangepasstes Kontaktmaterial (360) aufweist.

18. Beleuchtungsvorrichtung nach einem der einem der vorhergehenden Ansprüche, wobei die Flächenlichtquelle (250) eine organische Leuchtdiode ist.

19. Beleuchtungsvorrichtung nach einem der einem der vorhergehenden Ansprüche, wobei die Mehrzahl der individuellen Lichtquellen (310) anorganische Leuchtdioden (310) sind.

20. Beleuchtungsvorrichtung nach einem der der vorhergehenden Ansprüche, wobei die Lichtquelle (250; 300) und der Strahlformer (100) in einer zu einer Innenseite reflektierenden Hausung angeordnet sind.

21. Beleuchtungsvorrichtung (220) mit folgenden Merkmalen:

einem an einem gemeinsamen Substrat (170) angeordneten Strahlformer (100) zur Erzeugung eines Abstrahlprofils mit einer Vielzahl von einzelnen, benachbart angeordneten, optischen Strahlformungselementen (110) unterschiedlicher Typen,
wobei die einzelnen Strahlformungselemente (110) jeweils einem Typ einer Mehrzahl unterschiedlicher Typen mit unterschiedlichen optischen Eigenschaften angehören, wobei unterschiedliche Typen von Strahlformungselementen (110) zugeordnete Lichtverteilungen im Fernfeld oder in einer endlichen Bildebene bewirken;
wobei die einzelnen Strahlformungselemente (110) bei gemeinsamer Beleuchtung das Abstrahlprofil des Strahlformers (100) mit einer Überlagerung der den einzelnen Strahlformungselementen (110) zugeordneten Lichtverteilungen im Fernfeld oder in einer endlichen Bildebene bewirken;
wobei die einzelnen Strahlformungselemente (110) jeweils ein intensitätsmodulierendes Element (120) und ein bezüglich eines Strahlengangs der gemeinsamen Beleuchtung nachfolgendes, refraktives Element (130), das dem intensitätsmodulierenden Element (120) zugeordnet ist, aufweisen, um die dem einzelnen Strahlformungselement (110) zugeordnete Lichtverteilung zu erhalten,
wobei das refraktive Element (130) eine Zylinderlinse oder eine Halbzylinderlinse mit einer konvexen Brechungsfläche aufweist,
wobei das intensitätmodulierende Element (120) in Form einer Blende ausgebildet ist, wobei die Blendenöffnung in Richtung der axialen Länge der Zylinderlinse oder Halbzylinder längsgestreckt ist und wobei die Blendenöffnung zu beiden Seiten von einem reflektierenden und /oder absorbierenden Bereich umgeben ist,
einer an einem Substrat (240) angeordneten Lichtquelle (250; 310), die auf einer den refraktiven Elementen (130) der Vielzahl von Strahlformungselementen (110) abgewandten Seite der intensitätsmodulierenden Elemente (120) angeordnet ist, wobei die Lichtquelle (250; 310)
eine auf dem Substrat (240) angebrachte Flächenlichtquelle (250) oder eine Lichtquelleneinheit (300) mit einer Mehrzahl von individuellen Lichtquellen (310) aufweist, die auf dem Substrat implementiert sind, und wobei das Substrat (170) des Strahlformers (100) und das Substrat (250) der Lichtquelle (240) parallel zueinander angeordnet sind.

**22.** Beleuchtungsvorrichtung (220) nach Anspruch 21, bei dem das refraktive Element (130) ferner eine dem intensitätsmodulierenden Element (120) zugewandte Abstandsschicht (330) aufweist, und wobei die Zylinderlinse oder Halbzylinderlinse ferner eine plane, in unmittelbarem Kontakt mit der Abstandsschicht (330) stehende plane Brechungsfläche aufweist.

**Claims**

**1.** Illuminating device (220), comprising:

a beam shaper (100) arranged on a common substrate (170) for generating a radiation profile, comprising a multitude of individual, adjacently arranged optical beam-shaping elements (110) of different types,

wherein the individual beam-shaping elements (110) each belong to one type of a plurality of different types with different optical characteristics, wherein different types of beam-shaping elements (110) cause associated light distributions in the far field or in a finite image plane;
wherein the individual beam-shaping elements (110), when illuminated together, effect the radiation profile of the beam shaper (100) with a superposition of the light distributions associated to the individual beam-shaping elements (110) in the far field or in a finite image plane; and
wherein the individual beam-shaping elements (110) each comprise an intensity-modulating element (120) in the form of an aperture and a refractive element (130) following with respect to a beam path of the common illumination and associated with the intensity modulating element (120) to obtain the light distribution associated with the single beam-shaping element (110), the respective aperture of the intensity modulating elements (120) having a reflective and/or absorbing region surrounding the respective aperture opening, and

a light source (250; 310) arranged on a substrate (240) and arranged on a side of the intensity modulating elements (120) facing away from the refractive elements (130) of the plurality of beam-shaping elements (110), wherein the light source (250; 300) comprises an area light source (250) arranged on the substrate (240) or a light source unit (300) with a plurality of individual light sources (310) that are implemented on the substrate, and wherein the substrate (170) of the beam shaper (100) and the substrate (240) of the light source (250) are arranged parallel to each other.

**2.** Illuminating device (220) according to claim 1, wherein a first and a second type of the plurality of different types of beam-shaping elements (110) differ from each other at least with respect to at least one of the following features: a shape or size of the beam-shaping element (110), a height or a spacing of the intensity-modulating element (120) from the refractive element (130), a shape or size of an intensity-modulating structure (125) of the respective intensity-modulating element (120), a position of the intensity-modulating structure (125) of the intensity-modulating element (120) with respect to a position of the refractive element (130), an implementation of an edge area (165) between two adjacent beam-shaping elements (110) and a shape or size of the refractive element (130).

**3.** Illuminating device (220) according to one of the previous claims, wherein the beam-shaping elements (110) of the multitude of beam-shaping elements (110) are directly adjacent to each other.

**4.** Illuminating device (220) according to one of the previous claims, wherein the beam-shaping elements (110) of the multitude of beam-shaping elements (110) are arranged irregularly, at least in parts in a one-dimensional or two-dimensional manner.

**5.** Illuminating device (220) according to one of the previous claims, wherein the intensity-modulating elements (120) of the beam-shaping elements (110) comprise at least a reflective or absorbing layer, a reflective or absorbing layer system or a reflective or absorbing structured layer system.

**6.** Illuminating device (220) according to claim 5, wherein the intensity-modulating elements (120) comprise a reflective layer, a reflective layer system or a reflective structured layer system and an absorbing layer, an absorbing layer system or an absorbing structured layer system, wherein the absorbing layer, the absorbing layer system or the absorbing structured layer system face the refracting element (130), and the reflective layer, the reflective layer system or the reflective structured layer system face away from the refractive element (130).

7. Illuminating device (220) according to one of the previous claims, wherein the refractive elements (130) further comprise a spacing layer (330) facing the intensity-modulating element (120).

8. Illuminating device (220) according to one of the previous claims, wherein the beam-shaping elements (110) comprise at least parts of a common substrate (170) of the beam shaper (100).

9. Illuminating device (220) according to one of the previous claims, wherein a beam-shaping element (110) of the multitude of beam-shaping elements (110) is separated from an immediately adjacent beam-shaping element (110) by a separating structure (165).

10. Illuminating device (220) according to claim 9, wherein the separating structure (165) comprises a reflective or absorbing separating layer between adjacent beam-shaping elements (110).

11. Illuminating device (220) according to claim 10, wherein the reflective separating layer is configured as edge mirroring for optical insulation of adjacent beam-shaping elements (110).

12. Illuminating device (220) according to one of the previous claims, wherein the beam-shaping elements (110) comprise an additional transparent layer (340), which abuts on the intensity-modulating element (120) on a side facing away from the refractive element (130).

13. Illuminating device (220) according to one of the previous claims, wherein the refractive element (130) is implemented such that beams that do not immediately pass through the intensity-modulating element (120) of the beam-shaping element (110) of the refractive element are totally reflected towards the intensity-modulating element (120).

14. Illuminating device (220) according to one of the previous claims, wherein at least part of the multitude of optical beam-shaping elements (110) is implemented such that different beams passing different beam-shaping elements (110) intersect in an image area (400) at a predetermined spacing (390) from the beam shaper (100) to generate at least part of the radiation profile in the image area (400).

15. Illuminating device (220) according to one of the previous claims, wherein at least part of the multitude of optical beam-shaping elements (110) is implemented such that different beams passing different beam-shaping elements (100) leave the beam shaper (100) in parallel to generate at least part of the radiation profile in a far field.

16. Illuminating device (220) according to one of the previous claims, wherein the different optical characteristics of at least part of the plurality of types of beam-shaping elements (110) define a radiation characteristic, wherein information regarding a location of the beam-shaping elements (110) is entered into the radiation characteristic.

17. Illuminating device (220) according to claim 17, wherein the beam shaper (100) comprises an air gap (350) or a refractive index-matched contact material (360) between the light source (250; 300) and the intensity-modulating element (120).

18. Illuminating device (220) according to one of the previous claims, wherein the area light source (250) is an organic light emitting diode.

19. Illuminating device according to any one of the preceding claims, wherein the plurality of individual light sources (310) are inorganic light emitting diodes (310).

20. Illuminating device (220) according to one of the previous claims, wherein the light source (250; 300) and the beam shaper (100) are arranged in a housing reflective to the inside.

21. Illuminating device (220), comprising:

a beam shaper (100) arranged on a common substrate (170) for generating a radiation profile, comprising a multitude of individual, adjacently arranged optical beam-shaping elements (110) of different types,

wherein the individual beam-shaping elements (110) each belong to one of a plurality of different types having different optical properties, wherein different types of beam-shaping elements (110) provide associated light distributions in the far field or in a finite image plane;

wherein the individual beam-shaping elements (110), when illuminated together, effect the radiation profile of the beam shaper (100) with a superposition of the light distributions associated with the individual beam-shaping elements (110) in the far field or in a finite image plane;

wherein the individual beam-shaping elements (110) each comprise an intensity modulating element (120) and a refractive element (130) following with respect to a beam path of the common illumination and associated with the intensity modulating element (120) to obtain the light distribution associated with the individual beam-shaping element (110);

wherein the refractive element (130) comprises a cylindrical lens or a semi-cylindrical lens having a convex refractive surface,

wherein the intensity-modulating element (120) is formed in the shape of an aperture, wherein the aperture opening is longitudinal in the direction of the axial length of the cylindrical lens or semi-cylindrical lens and wherein the aperture opening is surrounded on both sides by a reflective and/or absorbing area,

a light source (250; 310) arranged on a substrate (240) and arranged on a side of the intensity modulating elements (120) facing away from the refractive elements (130) of the plurality of beam-shaping elements (110), wherein the light source (250; 300) comprises an area light source (250) arranged on the substrate (240) or a light source unit (300) with a plurality of individual light sources (310) that are implemented on the substrate, and wherein the substrate (170) of the beam shaper (100) and the substrate (240) of the light source (250) are arranged parallel to each other.

22. Illuminating device (220) according to claim 21, wherein the refractive element (130) further comprises a spacer layer (330) facing the intensity modulating element (120), and wherein the cylindrical lens or semi-cylindrical lens further comprises a planar refractive surface in direct contact with the spacer layer (330).

**Revendications**

1. Dispositif d'éclairage (220), aux caractéristiques suivantes:
un formateur de faisceau (100) disposé sur un substrat commun (170) et destiné à générer un profil de rayonnement, avec une pluralité d'éléments de formation de faisceau optiques (110) individuels disposés de manière adjacente, de types différents,

dans lequel les éléments de formation de faisceau (110) individuels appartiennent, chacun, à un type parmi une pluralité de types différents à propriétés optiques différentes, dans lequel différents types d'éléments de formation de faisceau (110) provoquent des répartitions de lumière associées dans le champ lointain ou dans un plan d'image fini;

dans lequel les éléments de formation de faisceau (110) individuels provoquent, à un éclairage commun, le profil de rayonnement du formateur de faisceau (100) avec une superposition des répartitions de lumière associées aux éléments de formation de faisceau (110) individuels dans le champ lointain ou dans un plan d'image fini; et

dans lequel les éléments de formation de faisceau (110) individuels présentent, chacun, un élément de modulation d'intensité (120) en forme de diaphragme et un élément de réfraction (130), suivant par rapport à un trajet de faisceau de l'éclairage commun, qui est associé à l'élément de modulation d'intensité (120), pour obtenir la répartition de lumière associée à l'élément de formation de faisceau (110) individuel, dans lequel le diaphragme respectif des éléments de modulation d'intensité (120) présente une zone réfléchissante et/ou absorbante qui entoure l'ouverture de diaphragme respective, et

une source de lumière (250; 310) disposée sur un substrat (240) et qui est disposée d'un côté des éléments de modulation d'intensité (120) opposé aux éléments de réfraction (130) de la pluralité d'éléments de formation de faisceau (110), où la source de lumière (250; 300) présente une source de lumière de surface (250) placée sur le substrat (240) ou une unité de sources de lumière (300) avec une pluralité de sources de lumière (310) individuelles qui sont mises en œuvre sur le substrat, et où le substrat (170) du formateur de faisceau (100) et le substrat (240) de la source de lumière (250) sont disposés de manière parallèle l'un à l'autre.

2. Dispositif d'éclairage (220) selon la revendication 1, dans lequel un premier et un deuxième type parmi la pluralité de types différents d'éléments de formation de faisceau (110) diffèrent l'un de l'autre au moins en ce qui concerne au moins une des caractéristiques suivantes:
une forme ou une grandeur de l'élément de formation de faisceau (110), une hauteur ou une distance de l'élément de modulation d'intensité (120) par rapport à l'élément de réfraction (130), une forme ou une grandeur d'une structure de modulation d'intensité (125) de l'élément de modulation d'intensité (120) respectif, une position de la structure de modulation d'intensité (125) de l'élément de modulation d'intensité (120) par rapport à une position de l'élément de réfraction (130), une réalisation d'une zone de bord (165) entre deux éléments de formation de faisceau (110) adjacents et une forme ou une grandeur de l'élément de réfraction (130).

3. Dispositif d'éclairage (220) selon l'une des revendications précédentes, dans lequel les éléments de formation de faisceau (110) de la pluralité d'éléments de formation de faisceau (110) sont directement adjacents l'un à l'autre.

4. Dispositif d'éclairage (220) selon l'une des revendications précédentes, dans lequel les éléments de formation de faisceau (110) de la pluralité d'éléments de formation de faisceau (110) sont disposés de manière irrégulière au moins en partie de manière unidimensionnelle ou bidimensionnelle.

5. Dispositif d'éclairage (220) selon l'une des revendications précédentes, dans lequel les éléments de modulation d'intensité (120) des éléments de formation de faisceau (110) présentent au moins une couche réfléchissante ou absorbante, un système de couches réfléchissantes ou absorbantes ou un système de couches structurées réfléchissantes ou absorbantes.

6. Dispositif d'éclairage (220) selon la revendication 5, dans lequel les éléments de modulation d'intensité (120) présentent une couche réfléchissante, un système de couches réfléchissantes ou un système de couches structurées réfléchissantes et une couche absorbante, un système de couches absorbantes ou un système de couches structurées absorbantes, dans lequel la couche absorbante, le système de couches absorbantes ou le système de couches structurées absorbantes est orienté vers l'élément de réfraction (130) et la couche réfléchissante, le système de couches réfléchissantes ou le système de couches structurées réfléchissantes est orienté de manière opposée à l'élément de réfraction (130).

7. Dispositif d'éclairage (220) selon l'une des revendications précédentes, dans lequel les éléments de réfraction (130) présentent par ailleurs une couche d'espacement (330) orientée vers l'élément de modulation d'intensité (120).

8. Dispositif d'éclairage (220) selon l'une des revendications précédentes, dans lequel les éléments de formation de faisceau (110) comportent au moins des parties d'un substrat commun (170) du formateur de faisceau (100).

9. Dispositif d'éclairage (220) selon l'une des revendications précédentes, dans lequel un élément de formation de faisceau (110) parmi la pluralité d'éléments de formation de faisceau (110) est séparé d'un élément de formation de faisceau (110) immédiatement adjacent par une structure de séparation (165).

10. Dispositif d'éclairage (220) selon la revendication 9, dans lequel la structure de séparation (165) comporte une couche de séparation réfléchissante ou absorbante entre éléments de formation de faisceau adjacents (110).

11. Dispositif d'éclairage (220) selon la revendication 10, dans lequel la couche de séparation réfléchissante est conçue comme une couche miroir de bord pour l'isolation optique d'éléments de formation de faisceau adjacents (110).

12. Dispositif d'éclairage (220) selon l'une des revendications précédentes, dans lequel les éléments de formation de faisceau (110) comportent une couche transparente additionnelle (340) qui est adjacente à l'élément de modulation d'intensité (120) d'un côté opposé à l'élément de réfraction (130).

13. Dispositif d'éclairage (220) selon l'une des revendications précédentes, dans lequel l'élément de réfraction (130) est conçu de sorte qu'au moins partiellement les faisceaux (430) qui ne tombent pas immédiatement à travers l'élément de modulation d'intensité (120) de l'élément de formation de faisceau (110) de l'élément de réfraction (130) soient réfléchis totalement vers l'élément de modulation d'intensité (120).

14. Dispositif d'éclairage (220) selon l'une des revendications précédentes, dans lequel au moins une partie de la pluralité d'éléments de formation de faisceau optiques (110) sont conçus de sorte que différents rayons qui passent par différents éléments de formation de faisceau (110) se coupent dans une zone d'image (400) à une distance prédéterminée (390) du formateur de faisceau (100) pour générer au moins une partie du profil de rayonnement dans la zone d'image (400).

15. Dispositif d'éclairage (220) selon l'une des revendications précédentes, dans lequel au moins une partie de la pluralité d'éléments de formation de faisceau optiques (110) sont conçus de sorte que différents faisceaux qui passent à travers différents éléments de formation de faisceau (110) quittent le moyen de formation de faisceau (100) en parallèle pour générer au moins une partie du profil de rayonnement dans un champ lointain.

16. Dispositif d'éclairage (220) selon l'une des revendications précédentes, dans lequel les différentes propriétés optiques d'au moins une partie de la pluralité de types d'éléments de formation de faisceau (110) définissent une caractéristique de rayonnement, dans lequel entre dans la caractéristique de rayonnement une information relative à un emplacement des éléments de formation de faisceau (110).

17. Dispositif d'éclairage selon l'une des revendications précédentes, dans lequel le formateur de faisceau (100) présente, entre la source de lumière (250; 300) et l'élément de modulation d'intensité (120), un entrefer (350) ou un matériau de contact (360) adapté à l'indice de réfraction.

18. Dispositif d'éclairage selon l'une des revendications précédentes, dans lequel la source de lumière de surface (250) est une diode électroluminescente organique.

19. Dispositif d'éclairage selon l'une des revendications précédentes, dans lequel la pluralité de sources de lumière (310) individuelles sont des diodes électroluminescentes inorganiques (310).

20. Dispositif d'éclairage selon l'une des revendications précédentes, dans lequel la source de lumière (250; 300) et le formateur de faisceau (100) sont disposés dans un logement réfléchissant vers l'intérieur.

21. Dispositif d'éclairage (220), aux caractéristiques suivantes:

un formateur de faisceau (100) disposé sur un substrat commun (170) et destiné à générer un profil de rayonnement, avec une pluralité d'éléments de formation de faisceau optiques (110) individuels disposés de manière adjacente de types différents,

dans lequel les éléments de formation de faisceau (110) individuels appartiennent, chacun, à un type parmi une pluralité de types différents à propriétés optiques différentes, dans lequel différents types d'éléments de formation de faisceau (110) provoquent des répartitions de lumière associées dans le champ lointain ou dans un plan d'image fini;
dans lequel les éléments de formation de faisceau (110) individuels provoquent, à un éclairage commun, le profil de rayonnement du formateur de faisceau (100) avec une superposition des répartitions de lumière associées aux éléments de formation de faisceau (110) individuels dans le champ lointain ou dans un plan d'image fini; et
dans lequel les éléments de formation de faisceau (110) individuels présentent, chacun, un élément de modulation d'intensité (120) et un élément de réfraction (130), suivant par rapport à un trajet de faisceau de l'éclairage commun, qui est associé à l'élément de modulation d'intensité (120), pour obtenir la répartition de lumière associée à l'élément de formation de faisceau (110) individuel,
dans lequel l'élément de réfraction (130) présente une lentille cylindrique ou une lentille semi-cylindrique avec une surface de réfraction convexe,
dans lequel l'élément de modulation d'intensité (120) est réalisé en forme de diaphragme, dans lequel l'ouverture de diaphragme est allongée dans la direction de la longueur axiale de la lentille cylindrique ou de la lentille semi-cylindrique et dans lequel l'ouverture de diaphragme est entourée des deux côtés par une zone réfléchissante et/ou absorbante,

une source de lumière (250; 310) disposée sur un substrat (240) et qui est disposée d'un côté des éléments de modulation d'intensité (120) opposé aux éléments de réfraction (130) de la pluralité d'éléments de formation de faisceau (110), où la source de lumière (250; 300) présente une source de lumière de surface (250) placée sur le substrat (240) ou une unité de sources de lumière (300) avec une pluralité de sources de lumière (310) individuelles qui sont mises en oeuvre sur le substrat, et où le substrat (170) du formateur de faisceau (100) et le substrat (240) de la source de lumière (250) sont disposés de manière parallèle l'un à l'autre.

22. Dispositif d'éclairage (220) selon la revendication 21, dans lequel l'élément de réfraction (130) présente par ailleurs une couche d'espacement (330) orientée vers l'élément de modulation d'intensité (120), et dans lequel la lentille cylindrique ou la lentille semi-cylindrique présente par ailleurs une surface de réfraction plane immédiatement en contact avec la couche d'espacement (330).

FIGUR 1

FIGUR 2

FIGUR 3

FIGUR 4

FIGUR 5

FIGUR 6A

FIGUR 6B

FIGUR 6C

FIGUR 6D

FIGUR 6E

FIGUR 6F

FIGUR 6G

FIGUR 6H

FIGUR 6I

FIGUR 6J

FIGUR 6K

FIGUR 6L

110

125

## FIGUR 7A

110

125-3    125-1    125-2

## FIGUR 7B

FIGUR 8A

FIGUR 8B

FIGUR 8C

FIGUR 8D

FIGUR 8E

FIGUR 8F

EP 2 414 886 B1

38

EP 2 414 886 B1

FIGUR 9A

FIGUR 9B

EP 2 414 886 B1

FIGUR 10A

EP 2 414 886 B1

FIGUR 10B

EP 2 414 886 B1

**FIGUR 10C**

FIGUR 11

FIGUR 12

FIGUR 13

FIGUR 14A

FIGUR 14B

FIGUR 15A

FIGUR 15B

FIGUR 16

FIGUR 17

FIGUR 18

FIGUR 19

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20070002452 A1
- US 20070002452 A
- US 20060291065 A1